# EUROPEAN PATENT SPECIFICATION

(11) **EP 2 541 659 B1**
(45) Date of publication and mention of the grant of the patent: **08.07.2015**
(21) Application number: 11758969.7
(22) Date of filing: 16.03.2011
(51) Int. Cl.: H01M 8/06, C01B 3/38, H01M 8/04

(54) **FUEL CELL SYSTEM AND CONTROL SYSTEM FOR SAME**
BRENNSTOFFZELLENSYSTEM UND STEUERVERFAHREN DAFÜR
SYSTÈME DE PILE À COMBUSTIBLE ET SYSTÈME DE COMMANDE POUR CELUI-CI

(30) Priority: 23.03.2010 JP 2010066057
(43) Date of publication of application: 02.01.2013
(73) Proprietor: Panasonic Intellectual Property Management Co., Ltd., Osaka 540-6207 (JP)
(72) Inventor: NAKAMURA, Akinari, 1-61, Shiromi, 2-chome Chuo-ku, Osaka-shi Osaka 540-6207 (JP); URATA, Takayuki, 1-61, Shiromi, 2-chome Chuo-ku, Osaka-shi Osaka 540-6207 (JP); YASUDA, Shigeki, 1-61, Shiromi, 2-chome Chuo-ku, Osaka-shi Osaka 540-6207 (JP)
(74) Representative: Grünecker Patent- und Rechtsanwälte PartG mbB
(86) International application number: PCT/JP2011/001537
(87) International publication number: WO 2011/118158

(56) References cited:
- JP-A- 8 078 037
- JP-A- 2001 348 202
- JP-A- 2002 220 204
- JP-A- 2003 203 666
- JP-A- 2003 229 157
- JP-A- 2003 229 157
- JP-A- 2003 292 303
- JP-A- 2003 308 870
- JP-A- 2008 077 973
- JP-A- 2008 223 627
- US-A1- 2002 045 077
- US-A1- 2004 047 788

## Description

### Technical Field

The present invention relates to a fuel cell system, and particularly to a fuel cell system configured to supply air to a selective oxidizer of a fuel processor and to a fuel cell at respective suitable flow rates by means of a single air supply unit.

### Background Art

Fuel cells generate power through an electrochemical reaction between hydrogen and oxygen. In general, air is supplied to a fuel cell and oxygen in the air is used to generate power. Meanwhile, hydrogen used in the power generation by a fuel cell is often supplied in the following manner: a fuel processor is operated, which is configured to generate, from a raw material, a fuel gas that contains hydrogen as a main component (i.e., hydrogen-rich fuel gas); and the hydrogen-rich fuel gas generated by the fuel processor is supplied to the fuel cell. Generally speaking, water and air are supplied to the fuel processor at the same time when the fuel processor generates the fuel gas.

There are disclosed conventional fuel cell systems that include a single compressor as an air supply unit and the compressor is configured to supply air to both a fuel cell and a fuel processor (see Patent Literature 1, for example).

Fig. 8 shows a conventional fuel cell system disclosed in Patent Literature 1. The conventional fuel cell system shown in Fig. 8 reads, from an air meter 121, the flow rate of air supplied from a compressor 115 to a fuel processor 113, and performs feedback control to correct the degree of opening of an air control valve 117 such that the air flow rate to be read, which is an actual air flow rate, coincides with a target air flow rate.

Patent Literature 2 discloses a fuel cell system in which an air supply device supplies air to the cathode of a fuel cell body, and to a reforming reactor and a CO remover. According to the fuel cell system disclosed in Patent Literature 2, an air flow rate to be used for supplying air to the reforming reactor, the air flow rate allowing an estimated peak temperature of the reforming reactor to be a target controlled temperature, can be obtained through feedback control. Patent Literature 3 discloses a fuel cell system with an air supply device, which supplies air to the cathode, a reformer and a selective CO oxidizer. The flow rate of air to the selective CO oxidizer is controlled with a valve.

### Citation List

### Patent Literature

PTL 1: Japanese Laid-Open Patent Application Publication No. 2001-332284
PTL 2: Japanese Laid-Open Patent Application Publication No. 2003-11 2902
PTL 3: Japanese Laid-Open Patent Application Publication No. 2003-229157

### Summary of Invention

### Technical Problem

Generally speaking, in order to realize improved performance of a fuel cell system, the fuel cell system needs to be configured as described below. Specifically, in the case of increasing or decreasing power generated by a fuel cell 119 (the amount of power generated by the fuel cell 119), it is necessary to increase or decrease both of the flow rate of a fuel gas supplied from the fuel processor 113 to the fuel cell 119 and the flow rate of air supplied from the compressor 115 to the fuel cell 119. That is, when the flow rate of air supplied to the fuel processor 113 is increased, the flow rate of air supplied to the fuel cell 119 also needs to be increased, and when the flow rate of air supplied to the fuel processor 113 is decreased, the flow rate of air supplied to the fuel cell 119 also needs to be decreased. Moreover, the flow rate of air supplied to a selective oxidizer needs to be precisely controlled in order to decrease carbon monoxide assuredly.

However, the above-described conventional fuel cell system configurations, in which a fuel cell system is configured to supply air to both a fuel cell and a selective oxidizer by means of a single air supply unit, have a problem that the performance of the fuel cell when generating power cannot be improved.

To be more specific, the conventional fuel cell system disclosed in Patent Literature 1 performs control to correct the degree of opening of the air control valve 117 such that the actual air flow rate coincides with the target air flow rate. Specifically, if power to be generated increases and thereby the target flow rate of the air supplied to the fuel processor 113 increases, then the degree of opening of the air control valve 117 is increased in order to increase the actual air flow rate. As a result, the ratio of the passage resistance of a passage through which the air flows to the fuel cell 119 in relation to the passage resistance of a passage through which the air flows to the fuel processor 113 increases. That is, the passage resistance of the passage through which the air is supplied to the fuel processor 113 decreases due to the increase in the degree of opening of the air control valve 117, and this consequently increases the ratio of the passage resistance of the passage through which the air flows to the fuel cell 119 in relation to the passage resistance of the passage through which the air is supplied to the fuel processor 113. Thus, in a case where power to be generated increases, the flow rate of the air supplied to the fuel cell 119 cannot be increased. To be specific, the flow rate of the air supplied to the fuel cell 119 decreases by an amount that corresponds to an increase in the flow rate of the air supplied to the fuel processor 113. On the other hand, if power to be generated decreases and thereby the target flow rate of the air supplied to the fuel processor 113 decreases, then the degree of opening of the air control valve 117 is decreased in order to decrease the actual air flow rate. As a result, the ratio of the passage resistance of the passage through which the air flows to the fuel cell 119 in relation to the passage resistance of the passage through which the air flows to the fuel processor 113 decreases. That is, the passage resistance of the passage through which the air is supplied to the fuel processor 113 increases due to the decrease in the degree of opening of the air control valve 117, and this consequently decreases the ratio of the passage resistance of the passage through which the air flows to the fuel cell 119 in relation to the passage resistance of the passage through which the air is supplied to the fuel processor 113. Thus, in a case where power to be generated decreases, the flow rate of the air supplied to the fuel cell 119 cannot be decreased. To be specific, the flow rate of the air supplied to the fuel cell 119 increases by an amount that corresponds to a decrease in the flow rate of the air supplied to the fuel processor 113. As a result, air cannot be sent to the cathode of the fuel cell at a suitable flow rate, causing a decrease in the power generation efficiency of the fuel cell.

Moreover, although the fuel cell system disclosed in Patent Literature 2 includes a flow rate sensor at a position upstream from an air flow rate adjustment valve configured to adjust the flow rate of air that flows into the reforming reactor, the fuel cell system does not include a flow rate sensor for measuring the flow rate of air that is sent to the CO remover. Therefore, the flow rate of the air sent to the CO remover cannot be measured. This makes it difficult to perform precise adjustment of the flow rate of the air sent to the CO remover. Patent Literature 2 discloses that the degree of opening of the air flow rate control valve and the driving force of the compressor are controlled, such that air flow rates at the reforming reactor, at the CO remover, and at the cathode become respective target values. However, such control is difficult for the reasons described below.

Specifically, in the case of increasing the flow rate of the air sent to the reforming reactor, it is possible that the air flow rate cannot be sufficiently increased only by controlling the degree of opening of the air flow rate control valve. In such a case, it is necessary to increase the amount of air supplied from the compressor. However, the air supply amount is controlled based on the flow rate sensor that measures the flow rate of the air sent to the reforming reactor. For this reason, the amount of air supplied from the compressor continuously varies during a certain period until the value measured by the flow rate sensor becomes stable at a certain value. While the amount of air supplied from the compressor varies, the flow rate of the air supplied to the CO remover also varies. Therefore, an air flow rate control valve for controlling the flow rate of the air supplied to the CO remover needs to be controlled in accordance with the variation.

If the flow rate of the air sent to the CO remover is varied through the control of the air flow rate control valve, the flow rate of the air supplied to the reforming reactor varies due to the variation. Accordingly, each time the flow rate of the air supplied to the reforming reactor varies, the air flow rate control valve for controlling the flow rate of the air supplied to the reforming reactor needs to be adjusted. Consequently, this makes it difficult to perform control such that air flow rates at the reforming reactor, at the CO remover, and at the cathode become respective target values. Accordingly, it is difficult to precisely adjust the flow rate of the air sent to the CO remover. As a result, carbon monoxide cannot be suitably reduced at the CO remover. This consequently causes degradation of the fuel cell due to carbon monoxide. Furthermore, if air (oxygen) is excessively sent to the CO remover at a flow rate higher than a desired flow rate, then hydrogen which is a fuel for the fuel cell is consumed, resulting in a decrease in power generation efficiency.

The present invention solves the above conventional problems. An object of the present invention is to provide a fuel cell system that is configured to supply air to both a fuel cell and a selective oxidizer from a single air supply unit and that realizes improved performance of the fuel cell when generating power, and to provide a method for controlling the fuel cell system.

### Solution to Problem

In order to solve the above-described conventional problems, a fuel cell system according to the present invention is defined in claim 1.

The "downstream" herein refers to the downstream with respect to the direction in which the reformed gas flows.

According to the above configuration, the second air passage is formed in a manner to branch off from the first air passage. Therefore, air can be sent to both of the cathode of the fuel cell and the selective oxidizer by means of the air supply device. Since the first flow rate measurement device is disposed on the second air passage, the flow rate of the air sent to the selective oxidizer through the second air passage can be precisely obtained. The controller is configured to control the supply performance of the air supply device with reference to the flow rate of the air sent to the selective oxidizer, such that the flow rate becomes the target value that is set based on power to be generated by the fuel cell. That is, the flow rate of the air sent to the selective oxidizer can be adjusted to a suitable flow rate in priority to the flow rate of the air sent to the cathode of the fuel cell.

When the fuel cell is generating power, if power to be generated by the fuel cell varies, then the air flow rate required by the cathode also varies. In this case, the variation in the air flow rate required by the cathode is less than a variation in the air flow rate required by the selective oxidizer since the first and second air passages are formed such that the flow rate of the air sent to the selective oxidizer is less than the flow rate of the air sent to the cathode. For this reason, when power to be generated by the fuel cell varies, the flow rate of the air sent to the selective oxidizer requires more precise air flow rate adjustment.

Thus, in the fuel cell system according to the present invention, the flow rate of the air sent to the selective oxidizer can be precisely adjusted, and carbon monoxide can be assuredly reduced through the selective oxidation reaction at the selective oxidizer. Since carbon monoxide can be assuredly reduced, degradation of the fuel cell due to carbon monoxide can be suppressed. Moreover, since the flow rate of the air sent to the selective oxidizer can be precisely adjusted, the following situation can be prevented from arising: air (oxygen) is sent excessively to the selective oxidizer and thereby hydrogen which acts as a fuel for the fuel cell is consumed, causing a decrease in power generation efficiency. That is, the fuel cell system realizes improved performance when generating power.

Thus, the present invention, when applied in a fuel cell system configured to supply air to both a fuel cell and a selective oxidizer from a single air supply unit, provides an advantageous effect of improving the performance of the fuel cell when generating power.

The above-described problem is also solved by a method for controlling a fuel cell system according to claim 9 of the present invention. Further advantageous embodiments are defined in claims 2 - 8.

### Advantageous Effects of invention

The present invention, when applied in a fuel cell system configured to supply air to both a fuel cell and a selective oxidizer from a single air supply unit, provides an advantage of improving the performance of a fuel processor when generating power.

### Brief Description of Drawings

[Fig. 1] Fig. 1 is a block diagram of a fuel cell system according to Embodiment 1 of the present invention.
[Fig. 2] Fig. 2 is a block diagram of a fuel cell system according to Embodiment 2 of the present invention.
[Fig. 3] Fig. 3 is a block diagram of a fuel cell system according to Embodiment 3 of the present invention.
[Fig. 4] Fig. 4 is a block diagram of the fuel cell system according to Embodiment 3 of the present invention.
[Fig. 5] Fig. 5 is a control flowchart of the fuel cell system according to Embodiment 3 of the present invention.
[Fig. 6] Fig. 6 is a block diagram of a fuel cell system according to Embodiment 4 of the present invention.
[Fig. 7] Fig. 7 is a control flowchart of the fuel cell system according to Embodiment 4 of the present invention.

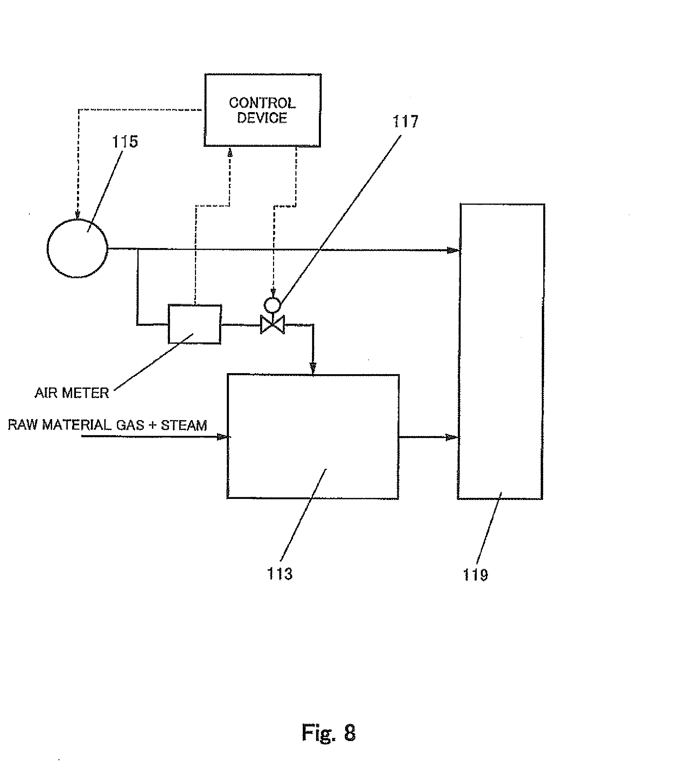

[Fig. 8] Fig. 8 is a block diagram of a conventional fuel cell system.

### Description of Embodiments

A first aspect of the present invention is a fuel cell system as defined in claim 1.

This configuration provides, in a fuel cell system configured to supply air to both a fuel cell and a selective oxidizer from a single air supply unit, an advantage of improving the performance of a fuel processor when generating power.

According to this configuration, in the case of decreasing the flow rate of the air sent to the fuel cell, control is performed to decrease the passage resistance of the second air passage by means of the passage resistance varying device. Accordingly, the air flow rate measured by the first flow rate measurement device increases. In accordance with the increase in the measured air flow rate, the controller controls the air supply device to decrease the supply performance. On the other hand, in the case of increasing the flow rate of the air sent to the fuel cell, control is performed to increase the passage resistance of the second air passage by means of the passage resistance varying device. Accordingly, the air flow rate measured by the first flow rate measurement device decreases. In accordance with the decrease in the measured air flow rate, the controller controls the air supply device to increase the supply performance. Thus, the air flow rate for sending air to the cathode of the fuel cell and the timing of changing the air flow rate for sending air to the cathode can be adjusted by adjusting the air flow rate for sending air to the selective oxidizer and the timing of changing the air flow rate for sending air to the selective oxidizer.

A second aspect of the present invention is a fuel cell system which is configured such that the fuel cell system according to the first aspect further includes an inverter circuit configured to convert DC power generated by the fuel cell into AC power and to output the AC power. The controller controls the passage resistance varying device in accordance with an output from the inverter circuit to control the supply performance of the air supply device, thereby varying the flow rate of the air sent to the selective oxidizer and the flow rate of the air sent to the fuel cell.

A third aspect of the present invention is a fuel cell system which is configured such that the fuel cell system according to the first aspect further includes a valve which is disposed, on the first air passage, at a position between the branching portion of the first air passage and the fuel cell and which is configured to supply air to the fuel cell and cut off air supply to the fuel cell. In a case of opening the valve to start supplying air to the fuel cell, the controller controls the passage resistance varying device to decrease the passage resistance of the second air passage.

According to this configuration, at the time of starting power generation, the controller opens the valve to supply air to the fuel cell, and performs passage resistance adjustment by means of the passage resistance varying device to lower the passage resistance of the second air passage. Accordingly, in the fuel cell system, the flow rate of the air supplied to the selective oxidizer can be maintained even when air is supplied to the cathode of the fuel cell.

A fourth aspect of the present invention is a fuel cell system which is configured such that the fuel cell system according to the first aspect further includes a second flow rate measurement device which is disposed, on the first air passage, at a position between the branching portion of the first air passage and the fuel cell and which is configured to measure the flow rate of air supplied to the fuel cell. The controller controls the passage resistance varying device based on the air flow rate measured by the second flow rate measurement device to vary the air flow rate measured by the first flow rate measurement device, and controls the supply performance of the air supply device in accordance with the varied air flow rate.

According to this configuration, the controller varies the air flow rates by means of the passage resistance varying device and controls the flow rate of the air supplied from the air supply device, based on the air flow rate measured by the first flow rate measurement device and the air flow rate measured by the second flow rate measurement device.

A fifth aspect of the present invention is a fuel cell system which is configured such that, in the fuel cell system according to the fourth aspect, the controller prestores a first flow rate threshold, which is set in advance in accordance with power to be generated by the fuel cell and which is calculated from the upper limit value of the flow rate of the air supplied to the fuel cell, and a second flow rate threshold, which is set in advance in accordance with power to be generated by the fuel cell and which is calculated from the lower limit value of the flow rate of the air supplied to the fuel cell, and the controller includes an air flow rate determination section configured to compare the air flow rate measured by the second flow rate measurement device with the first flow rate threshold and the second flow rate threshold. The controller performs control such that if the air flow rate determination section determines that the air flow rate measured by the second flow rate measurement device has exceeded the first flow rate threshold, then the controller increases the flow rate of the air that flows through the second air passage by controlling the passage resistance varying device to decrease the passage resistance of the second air passage, detects the increased flow rate from a result of measurement by the first flow rate measurement device, and decreases the supply performance of the air supply device. On the other hand, if the air flow rate determination section determines that the air flow rate measured by the second flow rate measurement device has fallen below the second flow rate threshold, then the controller decreases the flow rate of the air that flows through the second air passage by controlling the passage resistance varying device to increase the passage resistance of the second air passage, detects the decreased flow rate from a result of measurement by the first flow rate measurement device, and increases the supply performance of the air supply device.

According to this configuration, the controller includes the air flow rate determination section, and controls the flow rate of the air supplied from the air supply device, based on the comparison of the air flow rate measured by the second flow rate measurement device with the first flow rate threshold and the second flow rate threshold. If the air flow rate determination section determines that the air flow rate measured by the second flow rate measurement device has exceeded the first flow rate threshold, then the controller controls the passage resistance varying device to decrease the passage resistance of the second air passage. On the other hand, if the air flow rate determination section determines that the air flow rate measured by the second flow rate measurement device has fallen below the second flow rate threshold, then the controller controls the passage resistance varying device to increase the passage resistance of the second air passage.

A sixth aspect of the present invention is a fuel cell syetem which is configured such that the fuel cell system according to the first aspect further includes a voltage measurement device configured to measure a terminal voltage of the fuel cell. The controller stops the feedback control of the supply performance of the air supply device if, when the fuel cell is generating power, the controller determines based on a result of measurement by the voltage measurement device that the terminal voltage of the fuel cell has decreased by at least a first predetermined value which is set in advance.

According to this configuration, it can be determined from a decrease in the terminal voltage of the fuel cell that water blockage has occurred at the cathode. If it is determined that water blockage has occurred, the feedback control of the supply performance of the air supply device is stopped. This makes it possible to prevent the following situation: the flow rate of the air supplied to the fuel cell decreases due to water blockage at the cathode and thereby the flow rate of the air supplied to the selective oxidizer increases, resulting in a decrease in the supply performance of the air supply device. That is, decrease in the flow rate of the air supplied to the fuel cell can be limited, and thereby decrease in the terminal voltage of the fuel cell can be suppressed.

An seventh aspect of the present invention is a fuel cell system which is configured such that, in the fuel cell system according to the first aspect, the controller stops the feedback control of the supply performance of the air supply device if, when the fuel cell is generating power, a difference between the target value of the air flow rate and the value of the air flow rate measured by the first flow rate measurement device becomes greater than or equal to a first flow rate value which is set in advance.

According to this configuration, it is determined that there is water blockage at the cathode if a difference between the target value, which is set in accordance with power to be generated, and the value of the air flow rate measured by the first flow rate measurement device has become greater than or equal to the first flow rate value. If it is determined that there is water blockage, the feedback control of the supply performance of the air supply device is stopped, This makes it possible to prevent the following situation: the flow rate of the air supplied to the fuel cell decreases due to water blockage at the cathode and thereby the flow rate of the air supplied to the selective oxidizer increases, resulting in a decrease in the supply performance of the air supply device. That is, decrease in the flow rate of the air supplied to the fuel cell can be limited, and thereby decrease in the terminal voltage of the fuel cell can be suppressed.

A eighth aspect of the present invention is a fuel cell system which is configured such that, in the fuel cell system according to the seventh aspect, if the difference between the target value of the air flow rate and the value of the air flow rate measured by the flow rate measurement device becomes greater than or equal to the first flow rate value which is set in advance, and the target value of the air flow rate increases or decreases, then the controller stops the feedback control of the supply performance of the air supply device.

A ninth aspect of the present invention is a method for controlling a fuel cell system according to claim 9.

The above method provides an advantage of improving the performance of the fuel processor when generating power in the fuel cell system which is configured to supply air to both the fuel cell and the selective oxidizer from the single air supply device.

Hereinafter, embodiments of the present invention are described with reference to the drawings.

### (Embodiment 1)

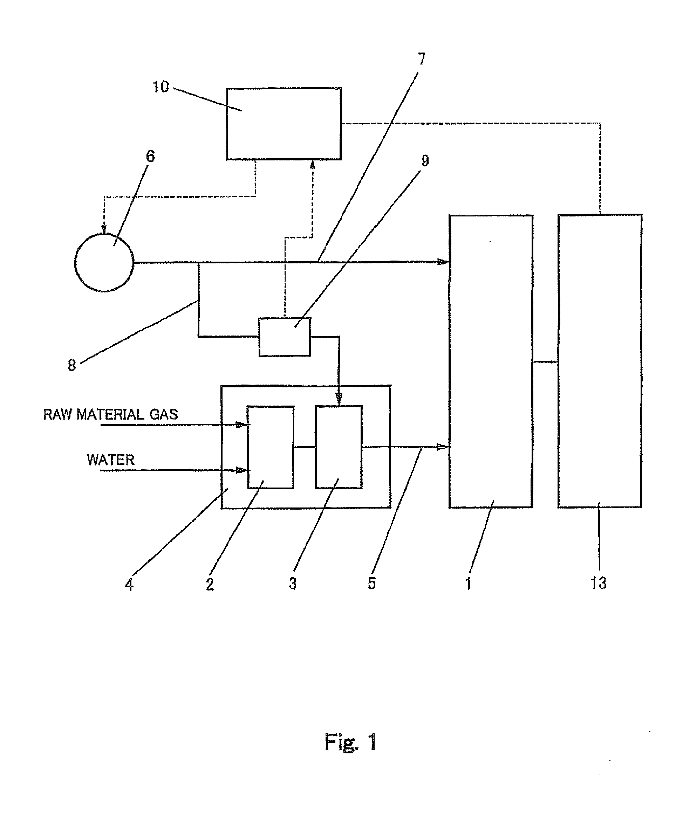

Fig. 1 is a block diagram showing a configuration of a fuel cell system according to Embodiment 1 of the present invention.

As shown in Fig. 1, a fuel cell power generation system according to Embodiment 1 includes: a fuel cell 1 configured to generate power by using a hydrogen-rich fuel gas and oxygen in air; a fuel processor 4 including a reformer 2 which is configured to generate a hydrogen-rich reformed gas by steam-reforming a hydrocarbon-based raw material gas such as a city gas or propane gas, and including a selective oxidizer 3 which is configured to generate the fuel gas by removing carbon monoxide from the reformed gas by using air; a fuel gas passage 5 through which the fuel gas generated in the fuel processor 4 flows to the fuel cell 1; an air blower 6 configured to supply the fuel cell 1 with air for use in the power generation, and to supply the selective oxidizer 3 with air for use in the removal of carbon monoxide; a cathode air passage (first air passage) 7 through which the air from the air blower 6 flows to the fuel cell 1; a selective oxidation air passage (second air passage) 8 which branches off from the cathode air passage 7 and through which the air from the air blower 6 flows to the selective oxidizer 3; a selective oxidation air meter 9 configured to measure the flow rate of the air flowing through the selective oxidation air passage 8; and a control unit (controller) 10 configured to control, based on the air flow rate measured by the selective oxidation air meter 9, the flow rate of air supplied to the selective oxidizer 3 by adjusting the amount of air supplied from the air blower 6. Thus, the air blower 6 serves to supply air to the cathode of the fuel cell 1 and to the selective oxidizer 3. DC power generated by the fuel cell 1 is converted by an inverter circuit 13, which is disposed subsequent to the fuel cell 1, into AC power, and the AC power is supplied to an electrical load or the like which is not shown.

It should be noted that the reformer 2, the selective oxidizer 3, the air blower 6, the selective oxidation air meter 9, and the inverter circuit 13, which are components of Embodiment 1, are specific implementation examples of the reformer, the selective oxidizer, the air supply unit (air supply means), the first flow rate measurement device (selective oxidation air flow rate detector), and the inverter circuit of the present invention. The cathode air passage 7 and the selective oxidation air passage 8 are formed such that the flow rate of the air sent from the air blower 6 to the selective oxidizer 3 is less than the flow rate of the air sent from the air blower 6 to the cathode of the fuel cell 1. Specifically, as one example, the diameter of the selective oxidation air passage 8 is designed to be smaller than the diameter of the cathode air passage 7. As an alternative example, the selective oxidation air passage 8 includes a fixed orifice of which the orifice diameter is smaller than the diameter of the cathode air passage 7. As another alternative example, an air control valve 12, which will be described below, may be attached to the selective oxidation air passage 8. In such a configuration, the air flow rate of the selective oxidation air passage 8 can be adjusted by setting the air control valve 12 as described below. Specifically, setting of the air control valve 12 is made such that even if the air control valve 12 is opened to the greatest degree, the width of the gap between the valve element and the valve seat of the air control valve 12 is smaller than the diameter of the cathode air passage 7. In this manner, by means of the air control valve 12, the flow rate of the air flowing through the selective oxidation air passage 8 may be adjusted to be less than the flow rate of the air flowing through the cathode air passage 8.

Hereinafter, specific operations of the fuel cell system according to the present embodiment are described.

In the fuel cell system shown in Fig. 1, odorant components contained in a city gas or propane gas supplied from a raw material source are removed by using a desulfurizer which is not shown. The city gas or propane gas, from which the odorant components have been removed, is supplied to the reformer 2 of the fuel processor 4 as a hydrocarbon-based raw material gas. The reformer 2 is also supplied with water which is necessary for a reforming reaction. At the reformer 2, the raw material gas and water are mixed together, and then the reformer 2 performs steam reforming using a catalyst to generate a hydrogen-rich reformed gas. The generated reformed gas is supplied to the selective oxidizer 3. The air from the air blower 6 is partially supplied to the selective oxidizer 3 through the selective oxidation air passage 8, and the selective oxidizer 3 selectively oxidizes carbon monoxide in the reformed gas into carbon dioxide by using a catalyst, thereby generating a fuel gas from which carbon monoxide has been removed. The fuel gas thus generated in the fuel processor 4, from which carbon monoxide has been removed, is supplied to the fuel cell 1 through the fuel gas passage 5. Also, the air from the air blower 6 is partially supplied to the fuel cell 1 through the cathode air passage 7. The fuel cell 1 causes an electrochemical reaction between hydrogen in the supplied fuel gas and oxygen in the supplied air, thereby generating power.

Next, a description is given of specific control operations which the control unit 10 of the fuel cell system according to Embodiment 1 performs for supplying air to the selective oxidizer.

The control unit 10 supplies a part of the air from the air blower 6 to the fuel cell 1 through the cathode air passage 7, and supplies the remaining part of the air to the selective oxidizer 3 through the selective oxidation air passage 8, while adjusting the performance of the air blower 6. The control unit 10 reads a signal that is outputted from the selective oxidation air meter 9 and that indicates an actual air flow rate, and performs feedback control to alter the performance of the air blower 6, such that the actual air flow rate read from the output signal of the selective oxidation air meter 9 coincides with a target air flow rate (a target value).

The fuel cell system according to Embodiment 1 is configured such that the air blower 6, which is a single air supply unit, supplies air to both the fuel cell 1 and the fuel processor 4. In the fuel cell system, the control unit 10 reads a signal that is outputted from the selective oxidation air meter 9 and that indicates an actual air flow rate, and performs feedback control to alter the performance of the air blower 6, such that the actual air flow rate read from the output signal of the selective oxidation air meter 9 coincides with a target air flow rate (target value). In this manner, the flow rate of the air supplied to the fuel processor 4 can be controlled. If, for example, power to be generated by the fuel cell 1 increases and thereby the target value of the flow rate of the air supplied to the selective oxidizer 3 increases, then the control unit 10 performs control as described above to increase the performance of the air blower 6. This allows the flow rate of the air supplied to the fuel cell 1 to be increased at the same time as the flow rate of the air supplied to the selective oxidizer 3 is increased. On the other hand, if power to be generated by the fuel cell 1 decreases and thereby the target value of the flow rate of the air supplied to the selective oxidizer 3 decreases, then the control unit 10 adjusts the performance of the air blower 6 as described above to decrease the performance of the air blower 6. This allows the flow rate of the air supplied to the fuel cell 1 to be decreased at the same time as the flow rate of the air supplied to the selective oxidizer 3 is decreased. That is, according to the fuel cell system configuration of the present embodiment, both of the flow rate of the air supplied to the fuel cell 1 and the flow rate of the air supplied to the fuel processor 4 can be increased or decreased at the same time through the control of the performance of the air blower 6 by the control unit 10.

Moreover, the control unit 10 is configured to determine the aforementioned increase/decrease in the power to be generated, that is, the increase/decrease in the target value of the flow rate of the air supplied to the selective oxidizer 3, based on the output power of the inverter circuit 13.

Although in the present embodiment the selective oxidation air passage 8 branches off from the cathode air passage 7, the present embodiment is not limited to this configuration. As an alternative, the selective oxidation air passage 8 may be configured to extend from a discharge outlet of the air blower 6, or from a supply inlet of the fuel cell 1.

Although the fuel processor 4 of the present embodiment includes the reformer 2 and the selective oxidizer 3, the present embodiment is not limited to this configuration. As an alternative, a shift converter configured to generate hydrogen from carbon monoxide and steam by using a catalyst may be provided between the reformer 2 and the selective oxidizer 3, and thereby the carbon monoxide concentration in the reformed gas may be reduced.

### (Embodiment 2)

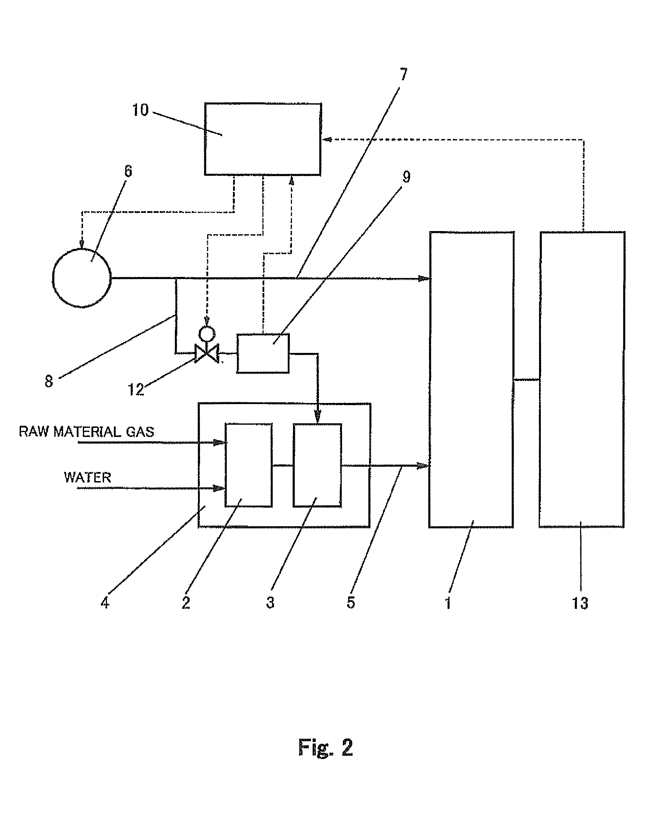

Fig. 2 is a block diagram showing a configuration of a fuel cell system according to Embodiment 2 of the present invention. In Fig. 2, the same components as those in Fig. 1 are denoted by the same reference signs as those used in Fig. 1, and the description thereof will be omitted below.

The fuel cell system according to Embodiment 2 is different from the fuel cell system according to Embodiment 1 in that the fuel cell system according to Embodiment 2 further includes the air control valve 12 which is configured to adjust a variable amount of the passage resistance of the selective oxidation air passage 8.

It should be noted that the air control valve 12, which is a component of Embodiment 2, is a specific implementation example of the passage resistance varying device (passage resistance varying means) of the present invention.

Hereinafter, specific operations of the fuel cell system according to Embodiment 2 are described.

In the fuel cell system shown in Fig. 2, odorant components contained in the city gas or propane gas supplied from the raw material source are removed by using the desulfurizer which is not shown. Then, the city gas or propane gas from which the odorant components have been removed is supplied to the reformer 2 of the fuel processor 4 as a hydrocarbon-based raw material gas. The reformer 2 is also supplied with water which is necessary for the reforming reaction. At the reformer 2, the raw material gas and water are mixed together, and then the reformer 2 performs steam reforming using a catalyst to generate a hydrogen-rich reformed gas. The generated reformed gas is supplied to the selective oxidizer 3. Prior to the start of power generation of the fuel cell 1, the control unit 10 adjusts the degree of opening of the air control valve 12 to the degree of opening for the period of a start-up process of the fuel processor 4. It should be noted that the start-up process of the fuel processor 4 includes various processes that need to be performed when the fuel processor 4 starts operating. The degree of opening of the air control valve 12 at this time is set to be within a range that allows a necessary air flow rate to be obtained for supplying air to the selective oxidizer 3 of the fuel processor 4.

The control unit 10 supplies the air from the air blower 6 to the selective oxidizer 3 while adjusting the air flow rate. To be specific, the control unit 10 reads an output signal of the selective oxidation air meter 9, and performs feedback control based on the value of the signal to control the air supply performance of the air blower 6, such that the flow rate of the air supplied to the selective oxidizer 3 becomes a target value that is set in accordance with power to be generated by the fuel cell 1. In this manner, air is supplied to the selective oxidizer 3 at a suitable flow rate. The selective oxidizer 3 selectively oxidizes carbon monoxide contained in the reformed gas into carbon dioxide by using a catalyst, thereby generating a fuel gas from which carbon monoxide has been removed. The fuel gas thus generated in the fuel processor 4, from which carbon monoxide has been removed, is supplied to the fuel cell 1 through the fuel gas passage 5. It should be noted that prior to the start of power generation of the fuel cell 1, there is a case where carbon monoxide is not sufficiently removed from the fuel gas that is discharged from the fuel processor 4, due to the temperatures of the reformer 2 and the catalyst of the selective oxidizer 3 which are included in the fuel processor 4. Therefore, prior to the start of power generation of the fuel cell 1, the fuel gas may be discharged from the fuel processor 4 by using a bypass passage, which is not shown, without supplying the fuel gas to the fuel cell 1.

When generating power at the fuel cell 1, the degree of opening of the air control valve 12 is adjusted to the degree of opening for the power generation period. In this manner, the flow rate of the air supplied from the air blower 6 to the selective oxidizer 3 through the selective oxidation air passage 8 can be finely adjusted. It should be noted that the degree of opening of the air control valve 12 when the power generation is performed by the fuel cell 1 is greater than the degree of opening that is set for the period of the start-up process of the fuel processor 4, so that a sufficient amount of fuel gas is supplied to the fuel cell 1. The fuel gas generated in the fuel processor 4, from which carbon monoxide has been removed, is supplied to the fuel cell 1 through the fuel gas passage 5. Meanwhile, the air from the air blower 6 is partially supplied to the fuel cell 1 through the cathode air passage 7. The fuel cell 1 causes an electrochemical reaction between hydrogen in the supplied fuel gas and oxygen in the supplied air, thereby generating power.

When the fuel cell 1 is generating power, if an increase or decrease in power to be generated occurs, the control unit 10 adjusts the degree of opening of the air control valve 12 in accordance with the increase or decrease in the power to be generated. Specifically, in the case of decreasing the flow rate of the air sent to the fuel cell 1, the control unit 10 performs control to increase the degree of opening of the air control valve 12, such that the passage resistance of the selective oxidation air passage 8 is decreased. Then, the control unit 10 reads an output signal of the selective oxidation air meter 9, and confirms that the air flow rate in the selective oxidation air passage 8 has increased through the performed control. On the other hand, in the case of increasing the flow rate of the air sent to the fuel cell 1, the control unit 10 performs control to decrease the degree of opening of the air control valve 12, such that the passage resistance of the selective oxidation air passage 8 is increased. Then, the control unit 10 reads an output signal of the selective oxidation air meter 9, and confirms that the flow rate of the air sent to the fuel cell 1 has increased through the performed control.

Accordingly, in the fuel cell system, a change in the flow rate of the air supplied from the air blower 6 to the fuel cell 1 and a timing of supplying air from the air blower 6 to the fuel cell 1 can be adjusted by controlling a change in the flow rate of the air supplied from the air blower 6 to the selective oxidizer 3 and a timing of supplying air from the air blower 6 to the selective oxidizer 3.

It should be noted that the control unit 10 is configured to determine the aforementioned increase/decrease in the power to be generated, based on the output power of the inverter circuit 13.

### (Embodiment 3)

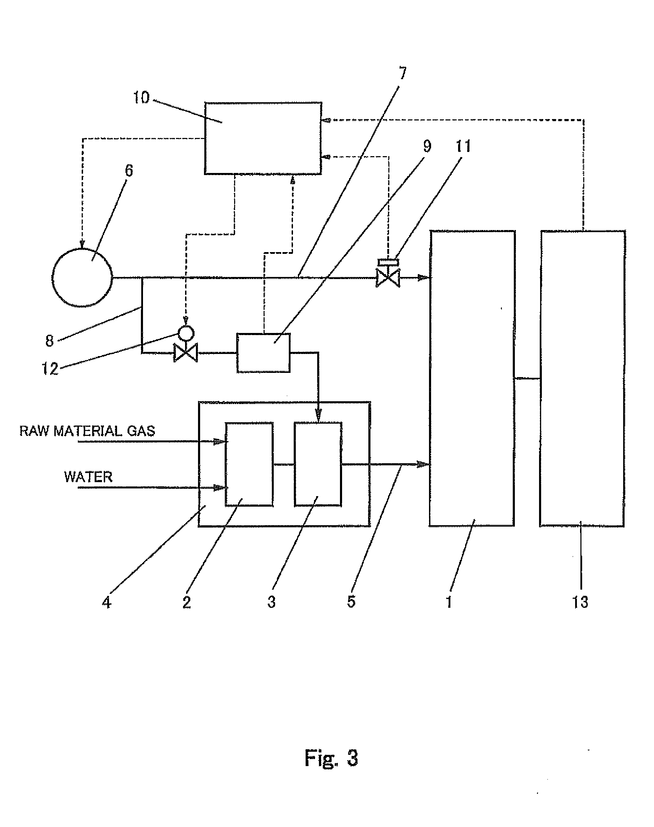

Fig. 3 is a block diagram showing a configuration of a fuel cell system according to Embodiment 3 of the present invention. In Fig. 3, the same components as those in Fig. 1 are denoted by the same reference signs as those used in Fig. 1, and the description thereof will be omitted below.

The fuel cell system according to Embodiment 3 is different from the fuel cell system according to Embodiment 1 in that the fuel cell system according to Embodiment 3 further includes: a cutoff valve 11 which is disposed on the cathode air passage 7 and which is configured to cut off air supply to the fuel cell 1; and the air control valve 12 which is configured to adjust a variable amount of the passage resistance of the selective oxidation air passage 8.

It should be noted that the cutoff valve 11 and the air control valve 12, which are components of Embodiment 3, are specific implementation examples of the valve (cutoff valve) and the passage resistance varying device (passage resistance varying means) of the present invention.

Hereinafter, specific operations of the fuel cell system according to Embodiment 3 are described.

In the fuel cell system shown in Fig. 3, odorant components contained in the city gas or propane gas supplied from the raw material source are removed by using the desulfurizer which is not shown. Then, the city gas or propane gas from which the odorant components have been removed is supplied to the reformer 2 of the fuel processor 4 as a hydrocarbon-based raw material gas. The reformer 2 is also supplied with water which is necessary for the reforming reaction. At the reformer 2, the raw material gas and water are mixed together, and then the reformer 2 performs steam reforming using a catalyst to generate a hydrogen-rich reformed gas. The generated reformed gas is supplied to the selective oxidizer 3. Prior to the start of power generation of the fuel cell 1, the control unit 10 controls the cutoff valve 11 to be in a closed state, and adjusts the degree of opening of the air control valve 12 to the degree of opening for the period of the start-up process of the fuel processor 4. It should be noted that the start-up process of the fuel processor 4 includes various processes that need to be performed when the fuel processor 4 starts operating. As will hereinafter be described in detail, while the start-up process of the fuel processor 4 is performed, the cutoff valve 11 is set to be in a closed state and only the air control valve 12 is in an opened state. The degree of opening of the air control valve 12 at this time is set to be within a range that allows a necessary air flow rate to be obtained for supplying air only to the fuel processor 4. As a result, air from the air blower 6 is supplied to the selective oxidizer 3 through the selective oxidation air passage 8. Then, the selective oxidizer 3 selectively oxidizes carbon monoxide in the reformed gas into carbon dioxide by using a catalyst, thereby generating a fuel gas from which carbon monoxide has been removed. The fuel gas thus generated in the fuel processor 4, from which carbon monoxide has been removed, is supplied to the fuel cell 1 through the fuel gas passage 5. It should be noted that prior to the start of power generation of the fuel cell 1, there is a case where carbon monoxide is not sufficiently removed from the fuel gas that is discharged from the fuel processor 4, due to the temperatures of the reformer 2 and the catalyst of the selective oxidizer 3 which are included in the fuel processor 4. Therefore, such fuel gas may be discharged by using a bypass passage, which is not shown, without supplying the fuel gas to the fuel cell 1.

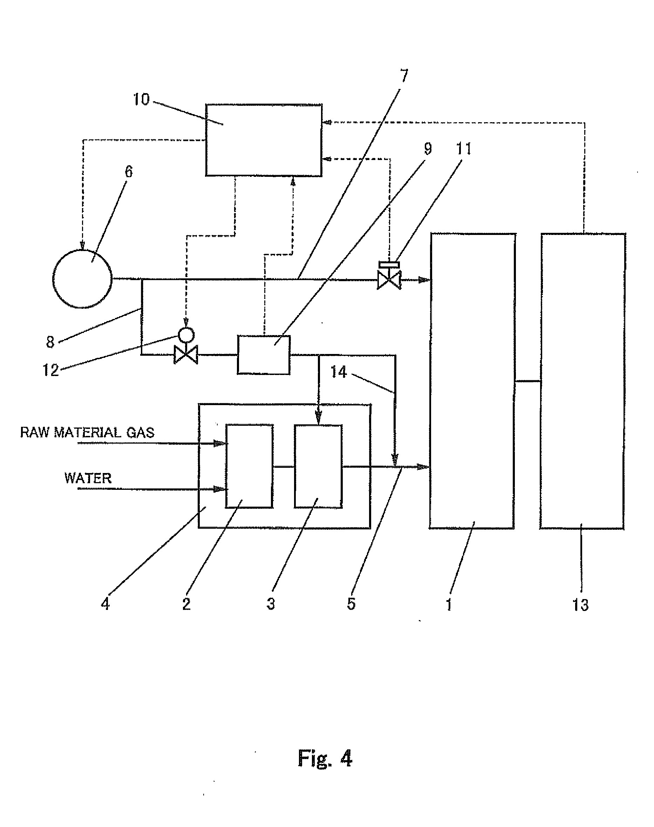

In addition, as shown in Fig. 4, an air bleeder 14 may be provided, which branches off from the selective oxidation air passage 8 and which connects to the fuel gas passage 5. The air bleeder 14 is a passage for supplying a small amount of air to be added to the fuel gas supplied from the selective oxidizer 3. The fuel gas contains carbon monoxide in a scale of ppm. The carbon monoxide is oxidized at the anode of the fuel cell 1 by using the air supplied from the air bleeder. In this manner, even carbon monoxide that is contained in the fuel gas in a scale of ppm can be oxidized. Therefore, anode degradation due to carbon monoxide contained in the fuel gas can be suppressed. It should be noted that if this configuration is employed, then the air flow rate measured by the selective oxidation air meter 9 is the sum of the flow rate of the air supplied to the selective oxidizer 3 and the flow rate of the air flowing through the air bleeder.

When generating power at the fuel cell 1, the cutoff valve 11 is opened, and the degree of opening of the air control valve 12 is adjusted to the degree of opening for the power generation period. As a result, the air from the air blower 6 is partially supplied to the selective oxidizer 3 through the selective oxidation air passage 8. It should be noted that the degree of opening of the air control valve 12 when the power generation is performed by the fuel cell 1 is greater than the degree of opening that is set for the period of the start-up process of the fuel processor 4, so that a sufficient amount of fuel gas is supplied to the fuel cell 1. The fuel gas generated in the fuel processor 4, from which carbon monoxide has been removed, is supplied to the fuel cell 1 through the fuel gas passage 5. Meanwhile, the air from the air blower 6 is partially supplied to the fuel cell 1 through the cathode air passage 7. The fuel cell 1 causes an electrochemical reaction between hydrogen in the supplied fuel gas and oxygen in the supplied air, thereby generating power.

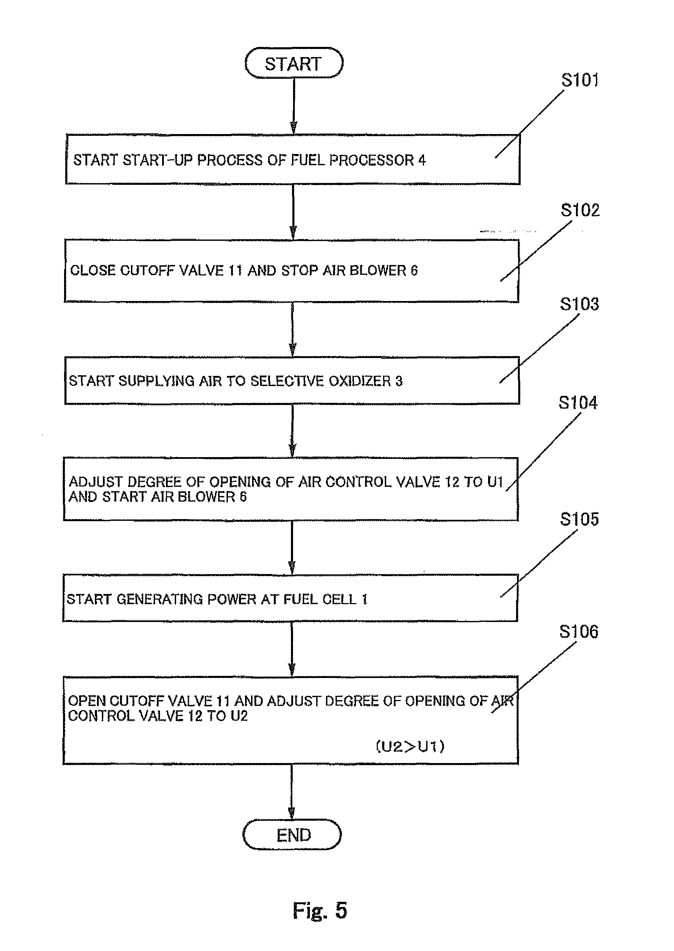

Next, with reference to a control flowchart shown in Fig. 5, a description is given of a flow of specific operations performed for supplying air to the selective oxidizer 3 of the fuel cell system according to the present embodiment.

Prior to the start of power generation of the fuel cell 1, the start-up process of the fuel processor 4 is started (step S101). At a point when the start-up process of the fuel processor 4 has just started, the control unit 10 controls the cutoff valve 11 to be in a closed state and stops the air blower 6 from operating, as indicated in step S102. Supply of air to the selective oxidizer 3 is started when the temperature of the catalyst of the selective oxidizer 3 in the fuel processor 4 reaches a temperature that allows a reaction to occur (step S103). At the start of supply of air to the selective oxidizer 3, as indicated in step S104, the control unit 10 adjusts the degree of opening of the air control valve 12 to a degree of opening U1 for the period of the start-up process of the fuel processor 4, and then starts the air blower 6. It should be noted that the flow rate of the air supplied to the selective oxidizer 3 is controlled through the feedback control previously described in Embodiment 1. When the start-up process of the fuel processor 4 is completed in the above manner, the operation advances to the start of power generation of the fuel cell 1 (step S105). At the start of power generation, as indicated in step S 106, the control unit 10 controls the cutoff valve 11 to be in an opened state, and adjusts the degree of opening of the air control valve 12 to a degree of opening U2 (U2>U1) for the power generation period. Accordingly, the supply of air from the air blower 6 to both the fuel cell 1 and the selective oxidizer 3 is started.

Thus, in the fuel cell system according to Embodiment 2, which is configured as described above, the control unit 10 performs control in the manner below. Specifically, in the start-up process of the fuel processor 4 prior to the start of power generation of the fuel cell 1, the control unit 10 adjusts the degree of opening of the air control valve 12 to the degree of opening U1 for the start-up period, and performs the feedback control, which is described in Embodiment 1, on the air blower 6 to control the flow rate of the air supplied to the selective oxidizer 3. When the operation advances to the start of power generation of the fuel cell 1 after the completion of the start-up process of the fuel processor 4, the control unit 10 opens the cutoff valve 11 to supply air for use in the power generation of the fuel cell 1 to the fuel cell 1 through the cathode air passage 7. Here, the number of destinations of the air supplied from the air blower 6 increases into two destinations, i.e., the fuel cell 1 and the selective oxidizer 3. Therefore, usually, the overall passage resistance of the selective oxidation air passage 8 and the cathode air passage 7 decreases. This causes a decrease in the discharge pressure of the air blower 6, resulting in a decrease in the flow rate of the air supplied to the selective oxidizer 3. However, in the control performed in the fuel cell system according to Embodiment 3, the degree of opening of the air control valve 12 is adjusted in step S106 to the degree of opening U2 (U2>U1) for the power generation period. This causes a decrease in the passage resistance of the selective oxidation air passage 8, thereby preventing a decrease in the flow rate of the air supplied to the selective oxidizer 3. That is, according to the configuration of the fuel cell system of Embodiment 3, a decrease in the flow rate of the air supplied to the selective oxidizer 3, which is caused when air starts to be supplied to the cathode at the start of power generation, can be prevented by adjusting the degree of opening of the air control valve 12 to the degree of opening U2 (U2>U1) for the power generation period. This realizes stable fuel gas generation. That is, even at the start of supplying air to the cathode of the fuel cell 1, a necessary air flow rate for supplying air to the selective oxidizer 3 can be maintained.

It should be noted that the degree of opening U1 of the air control valve 12 for the start-up period, and the degree of opening U2 of the air control valve 12 for the power generation period, are experimentally obtained in advance, and stored in a memory (not shown) of the control unit 10. This makes it possible to perform the specific air supply operations according to the present embodiment.

Further, according to the configuration of the fuel cell system of Embodiment 3, variable adjustment of the degree of opening of the air control valve 12 can be performed in accordance with power to be generated by the fuel cell 1. That is, the control unit 10 sets the degree of opening of the air control valve 12 to the degree of opening that is experimentally determined beforehand in accordance with power to be generated by the fuel cell 1, and then the control unit 10 adjusts the degree of opening of the air control valve 12 in a stepwise manner in accordance with power to be generated by the fuel cell 1. By varying the passage resistance of the selective oxidation air passage 8 in this manner, the flow of the air from the air blower 6 can be divided into an air flow into the selective oxidation air passage 8 and an air flow into the cathode air passage 7 at an optimal ratio.

### (Embodiment 4)

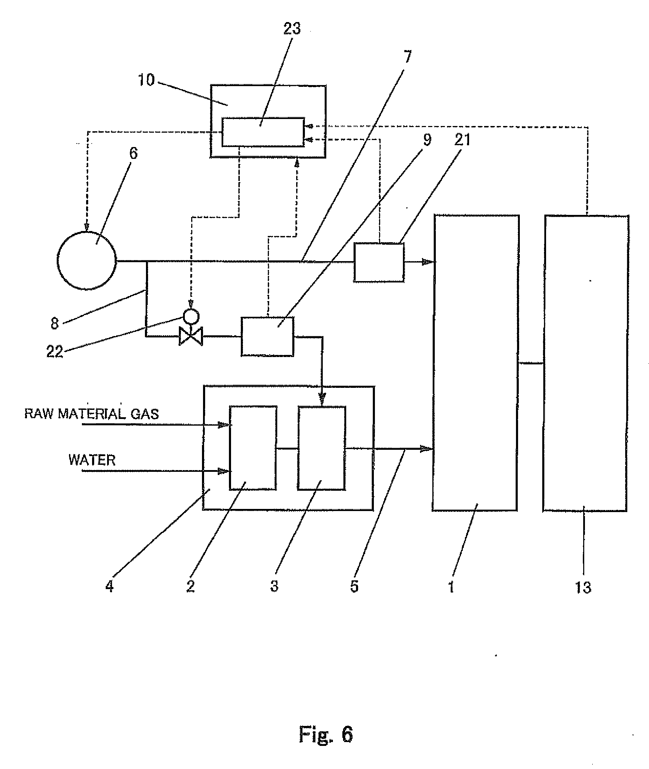

Fig. 6 is a block diagram showing a configuration of a fuel cell system according to Embodiment 4 of the present invention. In Fig. 6, the same components as those in Fig. 1 are denoted by the same reference signs as those used in Fig. 1, and the description thereof will be omitted below.

The fuel cell system according to Embodiment 4 is different from the fuel cell system according to Embodiment 1 in that the fuel cell system according to Embodiment 4 further includes: a cathode air meter 21 which is disposed on the cathode air passage 7 and which is configured to measure the flow rate of air supplied to the fuel cell 1; and an air control valve 22 configured to adjust a variable amount of the passage resistance of the selective oxidation air passage 8. In addition, the fuel cell system according to Embodiment 4 is different from the fuel cell system according to Embodiment 1 with respect to the following point: the fuel cell system according to Embodiment 4 stores a first flow rate threshold and a second flow rate threshold, which are calculated from the upper limit flow rate and the lower limit flow rate, respectively, of the range of the flow rate of air that is supplied to the fuel cell 1 in accordance with output from the fuel cell 1; and the controller 10 includes an air flow rate determination section (air flow rate determination means) 23 configured to determine the flow rate of the air supplied to the fuel cell 1, in relation to the first flow rate threshold and the second flow rate threshold.

It should be noted that the cathode air meter 21 and the air control valve 22, which are components of Embodiment 4, are specific implementation examples of the second flow rate measurement device (cathode air flow rate detector) and the passage resistance varying device of the present invention.

Hereinafter, specific operations of the fuel cell system according to Embodiment 4 are described.

In the fuel cell system shown in Fig. 6, odorant components contained in the city gas or propane gas supplied from the raw material source are removed by using the desulfurizer which is not shown. Then, the city gas or propane gas from which the odorant components have been removed is supplied to the reformer 2 of the fuel processor 4 as a hydrocarbon-based raw material gas. The reformer 2 is also supplied with water which is necessary for the reforming reaction. At the reformer 2, the raw material gas and water are mixed together, and then the reformer 2 performs steam reforming using a catalyst to generate a hydrogen-rich reformed gas. The generated reformed gas is supplied to the selective oxidizer 3. As a result of the control unit 10 adjusting the degree of opening of the air control valve 22 to the degree of opening for the power generation period, the air from the air blower 6 is partially supplied to the selective oxidizer 3 through the selective oxidation air passage 8. The selective oxidizer 3 selectively oxidizes carbon monoxide contained in the reformed gas into carbon dioxide by using a catalyst, thereby generating a fuel gas from which carbon monoxide has been removed. The fuel gas thus generated in the fuel processor 4, from which carbon monoxide has been removed, is supplied to the fuel cell 1 through the fuel gas passage 5. Meanwhile, the air from the air blower 6 is partially supplied to the fuel cell 1 through the cathode air passage 7. The fuel cell 1 causes an electrochemical reaction between hydrogen in the supplied fuel gas and oxygen in the supplied air, thereby generating power.

Next, a description is given of specific control operations that the control unit 10 of the fuel cell system according to Embodiment 4 performs for supplying air to the selective oxidizer 3.

The control unit 10 adjusts the performance of the air blower 6 to supply a part of the air from the air blower 6 to the fuel cell 1 through the cathode air passage 7, and the remaining part of the air to the selective oxidizer 3 through the selective oxidation air passage 8. The control unit 10 reads an output signal of the selective oxidation air meter 9, and performs feedback control to alter the performance of the air blower 6, such that an actual air flow rate read from the output signal of the selective oxidation air meter 9 coincides with a target air flow rate (a target value).

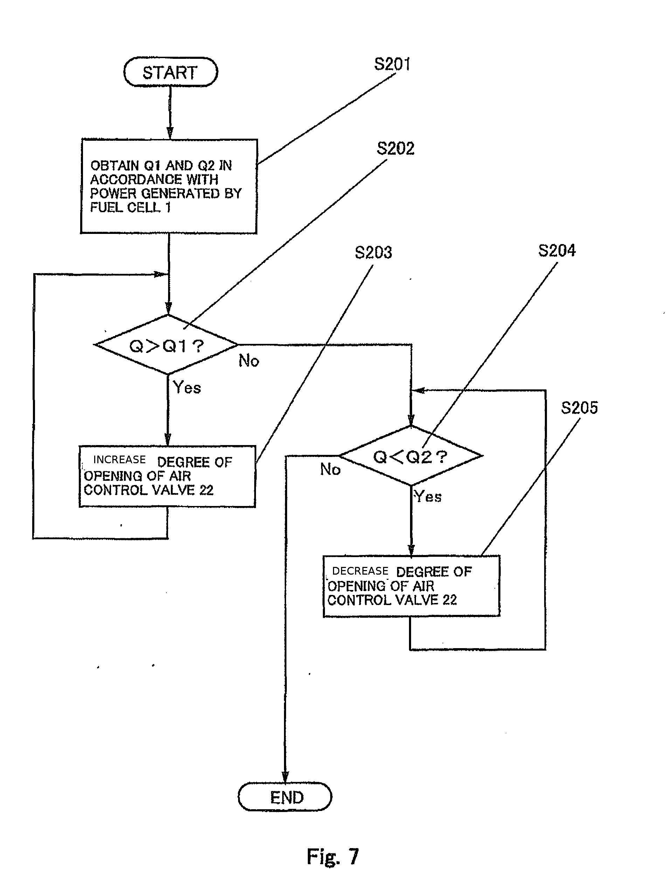

Described below with reference to a control flowchart shown in Fig. 7 are specific air supply control operations performed by the air flow rate determination section 23 of the control unit 10 of the fuel cell system according to Embodiment 4.

In step S201, the air flow rate determination section 23 of the control unit 10 obtains a first flow rate threshold Q1 and a second flow rate threshold Q2 which are set in advance in accordance with power to be generated by the fuel cell 1 and which are calculated from the upper limit flow rate (the upper limit value) and the lower limit flow rate (the lower limit value), respectively, of the range of the flow rate of air supplied to the fuel cell 1. In the next step S202, the air flow rate determination section 23 obtains an actual air flow rate Q from a result of measurement by the cathode air meter 21 (i.e., from an output signal of the cathode air meter 21). Then, the air flow rate determination section 23 compares Q with Q1. If Q>Q1, the air flow rate determination section 23 advances to step S203 in which to perform control to increase the degree of opening of the air control valve 22. When the degree of opening of the air control valve 22 is increased, the air flow rate measured by the selective oxidation air meter 9 is increased to be greater than the target air flow rate (the target value). Therefore, the control unit 10 performs the above-described feedback control to decrease the performance of the air blower 6. Consequently, the actual air flow rate Q measured by the cathode air meter 21 is decreased. Next, the flow returns to step S202 to compare Q with Q1. If Q≤Q1, the flow advances to step S204 in which the air flow rate determination section 23 compares Q with Q2. If Q<Q2, the flow advances to step S205 in which the air flow rate determination section 23 performs control to decrease the degree of opening of the air control valve 22. When the degree of opening of the air control valve 22 is decreased, the air flow rate measured by the selective oxidation air meter 9 is decreased to be lower than the target air flow rate (the target value). Therefore, the control unit 10 performs the above-described feedback control to increase the performance of the air blower 6. Consequently, the actual air flow rate Q measured by the cathode air meter 21 is increased. Next, the flow returns to step S204 to compare Q with Q2. If Q ≥Q2, the control operations by the air flow rate determination section 23 are ended since the actual air flow rate Q measured by the cathode air meter 21 has been adjusted to fall between the first flow rate threshold Q1 and the second flow rate threshold Q2, i.e., Q2≤Q≤Q1.

The fuel cell system configured according to Embodiment 4 provides the same operational advantages as those provided by the fuel cell system according to Embodiment 1. Specifically, in the fuel cell system where the air blower 6, which is a single air supply unit, supplies air to both the fuel cell 1 and the fuel processor 4, the control unit 10 is configured to control the flow rate of the air supplied to the fuel processor 4 by performing feedback control in response to an actual air flow rate measured by the selective oxidation air meter 9. Through the control of the performance of the air blower 6 by the control unit 10, both of the flow rate of the air supplied to the fuel cell 1 and the flow rate of the air supplied to the fuel processor 4 can be increased or decreased at the same time, and also, advantageous effects can be obtained as described below. Specifically, the air flow rate determination section 23 of the control unit 10 is configured to: compare the actual air flow rate Q, which is read from the cathode air meter 21, with the first flow rate threshold Q1 and the second flow rate threshold Q2 which are set in advance in accordance with power to be generated by the fuel cell 1; increase the degree of opening of the air control valve 22 if Q>Q1, so that Q≤Q1; and decrease the degree of opening of the air control valve 22 if Q<Q2, so that Q≥Q2. In this manner, adjustment can be performed to realize Q2≤Q≤Q1. Thus, since the air flow rate Q can be adjusted to fall between the first flow rate threshold Q1 and the second flow rate threshold Q2, the fuel cell system can be stably operated.

It should be noted that in the above-described fuel cell systems according to Embodiments 1 to 4, there is a case where water is generated at the cathode due to a progress in the electrochemical reaction at the fuel cell 1, and the generated water hinders the supply of air (oxygen) necessary for the reaction. If such water blockage occurs and hinders the supply of air to the cathode, then the pressure loss in the cathode air passage 7 increases. This causes a decrease in the flow rate of the air supplied to the cathode. Accordingly, the flow rate of the air supplied to the selective oxidizer 3 is increased by an amount that corresponds to the decrease. When the increase in the air flow rate is detected from a result of the measurement by the selective oxidation air meter 9, the control unit 10 decreases the air supply performance of the air blower 6 through the above-described feedback control. Consequently, the flow rate of the air supplied to the cathode decreases, and this further increases the likelihood of the occurrence of water blockage, which is a vicious cycle. Due to the vicious cycle, the flow rate of the air supplied to the cathode decreases in the fuel cell system, causing negative effects, for example, a significant decrease in terminal voltage of the fuel cell 1.

In order to address the above problem, the fuel cell system may be configured as described below.

Specifically, the fuel cell system further includes a voltage measurement device (not shown) which is configured to measure a terminal voltage of the cell stack of the fuel cell 1, and to store the measurement result. The control unit 10 stops the feedback control of the air blower 6 for a particular period (e.g., 15 seconds) if the measurement result stored in the voltage measurement device indicates that the terminal voltage of the cell stack has decreased by at least a predetermined voltage value during a predetermined period.

To be more specific, when the control unit 10 detects a variation in air flow rate from a result of the measurement by the selective oxidation air meter 9, the control unit 10 performs the following determination prior to the above-described feedback control of the air blower 6: the control unit 10 determines from a result of the measurement by the voltage measurement device whether the terminal voltage of the cell stack has decreased by at least a predetermined voltage value (first voltage value) during a predetermined period. To be specific, the control unit 10 determines whether the following relationship is satisfied: change amount ΔV of terminal voltage (DC voltage) ≤-first voltage value V.

It should be noted that the range of a decrease in the terminal voltage of the cell stack, which decrease is caused by an occurrence of water blockage in the passage through which air is supplied to the cathode, is measured in advance, and the first voltage value is determined from the measurement result. Further, in the present embodiment, the predetermined period for measuring a variation in the terminal voltage of the cell stack is set to three seconds. However, the length of the predetermined period is not limited to three seconds. Moreover, although the period over which the feedback control is stopped is set to 15 seconds, the period is not limited to this length.

Alternatively, a second voltage value, which is slightly less than the first voltage value, may be set. The control unit 10 may be configured to determine, from a result of the measurement by the voltage measurement device, whether the terminal voltage of the cell stack has decreased by at least the predetermined voltage value (second voltage value) a plurality of times (e.g., twice) consecutively during the predetermined period. That is, the control unit 10 may determine whether the following relationship is satisfied the plurality of times (twice) consecutively: change amount ΔV of terminal voltage ≤ -second voltage value V.

Further alternatively, the target value for the flow rate of the air supplied to the selective oxidizer 3, which is set in accordance with power to be generated by the fuel cell 1, may be used in the manner described below to determine whether there is water blockage.

Specifically, the target value is variable in accordance with an increase/decrease in power to be generated by the fuel cell 1. For a predetermined period (e.g., three seconds), it is determined, from a variation range ΔR of the target value for the flow rate of the air supplied to the selective oxidizer 3, whether the target value has varied. That is, it is determined whether the following relationship is satisfied: ΔR≥0 (NLM: L/min[normal]). If it is determined that the target value has varied, then an air flow rate that the selective oxidation air meter 9 has measured for the predetermined period (three seconds) is compared with the target value to obtain a difference ΔQ therebetween. If the difference ΔQ being a predetermined first flow rate value or greater is detected a plurality of times (e.g., twice) consecutively, then it may be determined that there is water blockage. In other words, it is determined whether the following relationship is satisfied the plurality of times (e.g., twice) consecutively: difference ΔQ ≥first flow rate value. It should be noted that a discrepancy between the air flow rate measured by the selective oxidation air meter 9 and the target value, which discrepancy occurs if there is water blockage in the passage through which air is sent to the cathode of the fuel cell 1, is checked in advance, and the discrepancy value is used as the first flow rate value.

Alternatively, whether the relationship, difference ΔQ ≥first flow rate value, is satisfied may only be determined. In this case, if the relationship is satisfied, then it may be determined that there is water blockage, and the feedback control of the air blower 6 may be stopped for a particular period.

Further, if the flow rate of the air supplied to the selective oxidizer 3 is continuously increasing, and thereby the variation range of the target value has become great, it may be determined that there is water blockage. To be specific, assume a case where the difference between the currently set target value and the immediately previously set target value is ΔR, and the difference between the immediately previously set target value and the target value set immediately prior thereto is ΔR'. In this case, if ΔR > 0 (NLM) and ΔR' > 0 (NLM) are satisfied, then it may be determined that there is water blockage.

### Industrial Applicability

The fuel cell system according to the present invention is capable of: supplying air to both the fuel cell and the fuel processor from the single air supply unit; controlling the flow rate of the air supplied to the fuel processor; and increasing/decreasing both of the flow rate of the air supplied to the fuel cell and the flow rate of the air supplied to the fuel processor in accordance with an increase/decrease in power to be generated. Therefore, the present invention is useful in a fuel cell system that includes a fuel processor and that is configured to increase/decrease its power generation.

### Reference Signs List

- 1: fuel cell
- 2: reformer
- 3: selective oxidizer
- 4: fuel processor
- 5: fuel gas passage
- 6: air blower
- 7: cathode air passage
- 8: selective oxidation air passage
- 9: selective oxidation air meter
- 10: control unit
- 11: cutoff valve
- 12: air control valve
- 13: inverter circuit
- 21: cathode air meter
- 22: air control valve
- 23: air flow rate determination section
- 113: fuel processor
- 115: compressor
- 117: air control valve
- 119: fuel cell
- 121: air meter

## Claims

1. A fuel cell system comprising:
a fuel cell (1) configured to generate power by using a fuel gas and air;
a fuel processor (4) including a reformer (2) configured to generate, from a raw material and water, a reformed gas that contains hydrogen as a main component, and including a selective oxidizer (3) disposed downstream from the reformer (2) and configured to generate the fuel gas by causing a selective oxidation reaction between carbon monoxide contained in the reformed gas and oxygen in air;
an air supply device (6) configured to send air for use in generating power to a cathode of the fuel cell (1), and to send air for use in the selective oxidation reaction to the selective oxidizer (3);
a first air passage (7), one end of which is connected to the cathode of the fuel cell (1) and the other end of which is connected to the air supply device (6);
a second air passage (8), one end of which is connected to a branching portion, of the first air passage (7), at which the second air passage (8) branches off from the first air passage (7), and the other end of which is connected to the selective oxidizer (3);
a first flow rate measurement device (9) disposed on the second air passage (8) and
configured to measure the flow rate of air supplied to the selective oxidizer (3); and
a controller (10) configured to control the air supply device (6),
further comprising
a passage resistance varying device (12) disposed on the second air passage (8) and
configured to vary the passage resistance of the second air passage (8),
wherein the first and second air passages (7, 8) are formed such that the flow rate of the air sent to the selective oxidizer (3) is less than the flow rate of the air sent to the cathode,
while the fuel cell (1) is generating power, the controller (10) is configured to perform feedback control of controlling the supply performance of the air supply device (6) based on the flow rate of the air sent to the selective oxidizer (3), which flow rate is measured by the first flow rate measurement device (9), such that the flow rate of the air sent to the selective oxidizer (3) becomes a target value that is set based on power to be generated by the fuel cell (1), and the controller (10) is configured to control the supply performance so as to supply air to the cathode and the selective oxidizer (3),
**characterized in that** the controller (10) performs control such that in a case of decreasing the flow rate of the air sent to the fuel cell (1), the controller (10) is configured to control the passage resistance varying device (12) to decrease the passage resistance of the second air passage (8), to detect an increase in the air flow rate measured by the first flow rate measurement device (9), and to decrease the supply performance of the air supply device (6), and
in a case of increasing the flow rate of the air sent to the fuel cell (1), the controller (10) is configured to control the passage resistance varying device (12) to increase the passage resistance of the second air passage (8), to detect a decrease in the air flow rate measured by the first flow rate measurement device (9), and to increase the supply performance of the air supply device (6).

2. The fuel cell system according to claim 1, further comprising an inverter circuit configured to convert DC power generated by the fuel cell (1) into AC power and to output the AC power, wherein
the controller (10) is configured to control the passage resistance varying device in accordance with an output from the inverter circuit to control the supply performance of the air supply device (6), thereby varying the flow rate of the air sent to the selective oxidizer (3) and the flow rate of the air sent to the fuel cell (1).

3. The fuel cell system according to claim 1 or claim 2, further comprising a valve which is disposed, on the first air passage (7), at a position between the branching portion of the first air passage (7) and the fuel cell (1) and which is configured to supply air to the fuel cell (1) and cut off air supply to the fuel cell (1), wherein
in a case of opening the valve to start supplying air to the fuel cell (1), the controller (10) is configured to control the passage resistance varying device to decrease the passage resistance of the second air passage (8).

4. The fuel cell system according to any one of claims 1 to 3, further comprising a second flow rate measurement device which is disposed, on the first air passage (7), at a position between the branching portion of the first air passage (7) and the fuel cell (1) and which is configured to measure the flow rate of air supplied to the fuel cell (1),
wherein
the controller (10) is configured to control the passage resistance varying device based on the air flow rate measured by the second flow rate measurement device to vary the air flow rate measured by the first flow rate measurement device (9), and to control the supply performance of the air supply device (6) in accordance with the varied air flow rate.

5. The fuel cell system according to claim 4, wherein
the controller(10) is configured to prestore a first flow rate threshold, which is set in advance in accordance with power to be generated by the fuel cell (1) and which is calculated from the upper limit value of the flow rate of the air supplied to the fuel cell (1), and a second flow rate threshold, which is set in advance in accordance with power to be generated by the fuel cell (1) and which is calculated from the lower limit value of the flow rate of the air supplied to the fuel cell (1), and the controller (10) includes an air flow rate determination section configured to compare the air flow rate measured by the second flow rate measurement device with the first flow rate threshold and the second flow rate threshold, and
the controller (10) is configured to perform control such that
if the air flow rate determination section determines that the air flow rate measured by the second flow rate measurement device has exceeded the first flow rate threshold, then the controller (10) is configured to increase the flow rate of the air that flows through the second air passage (8) by controlling the passage resistance varying device to decrease the passage resistance of the second air passage (8), to detect the increased flow rate from a result of measurement by the first flow rate measurement device (9), and to decrease the supply performance of the air supply device (6), and
if the air flow rate determination section determines that the air flow rate measured by the second flow rate measurement device has fallen below the second flow rate threshold, then the controller (10) is configured to decrease the flow rate of the air that flows through the second air passage (8) by controlling the passage resistance varying device to increase the passage resistance of the second air passage (8), to detect the decreased flow rate from a result of measurement by the first flow rate measurement device (9), and to increase the supply performance of the air supply device (6).

6. The fuel cell system according to any one of claims 1 to 5, further comprising a voltage measurement device configured to measure a terminal voltage of the fuel cell (1), wherein
the controller (10) is configured to stop the feedback control of the supply performance of the air supply device (6) if, when the fuel cell (1) is generating power, the controller (10) is configured to determine based on a result of measurement by the voltage measurement device that the terminal voltage of the fuel cell (1) has decreased by at least a first predetermined value which is set in advance.

7. The fuel cell system according to any one of claims 1 to 5, wherein
the controller (10) is configured to stop the feedback control of the supply performance of the air supply device (6) if, when the fuel cell (1) is generating power, a difference between the target value of the air flow rate and the value of the air flow rate measured by the first flow rate measurement device (9) becomes greater than or equal to a first flow rate value which is set in advance.

8. The fuel cell system according to claim 7, wherein
if the difference between the target value of the air flow rate and the value of the air flow rate measured by the first flow rate measurement device (9) becomes greater than or equal to the first flow rate value which is set in advance, and the target value of the air flow rate increases or decreases, then the controller (10) is configured to stop the feedback control of the supply performance of the air supply device (6).

9. A method for controlling a fuel cell system,
the fuel cell system including:
a fuel cell (1) configured to generate power by using a fuel gas and air;
a fuel processor (4) including a reformer (2) configured to generate, from a raw material and water, a reformed gas that contains hydrogen as a main component, and including a selective oxidizer (3) disposed downstream from the reformer (2) and configured to generate the fuel gas by causing a selective oxidation reaction between carbon monoxide contained in the reformed gas and oxygen in air;
an air supply device (6) configured to send air for use in generating power to a cathode of the fuel cell (1), and to send air for use in the selective oxidation reaction to the selective oxidizer (3);
a first air passage (7), one end of which is connected to the cathode of the fuel cell (1) and the other end of which is connected to the air supply device (6);
a second air passage (8), one end of which is connected to a branching portion,
of the first air passage (7), at which the second air passage (8) branches off from the first air passage (7), and the other end of which is connected to the selective oxidizer (3);
a first flow rate measurement device (9) disposed on the second air passage (8) and configured to measure the flow rate of air supplied to the selective oxidizer (3); and
a controller (10) configured to control the air supply device (6),
**characterized by** further comprising
a passage resistance varying device (12) disposed on the second air passage (8) and configured to vary the passage resistance of the second air passage (8),
wherein the first and second air passages (7, 8) are formed such that the flow rate of the air sent to the selective oxidizer (3) is less than the flow rate of the air sent to the cathode,
the method comprising
performing, by the controller (10), feedback control of controlling the supply performance of the air supply device (6) not based on the flow rate of air supplied to the cathode but based on the flow rate of the air sent to the selective oxidizer (3), which flow rate is measured by the first flow rate measurement device (9), such that the flow rate of the air sent to the selective oxidizer (3) becomes a target value that is set based on power to be generated by the fuel cell (1),
in a case of decreasing the flow rate of the air sent to the fuel cell (1), controlling, by the controller (10), the passage resistance varying device (12) to decrease the passage resistance of the second air passage (8), to detect an increase in the air flow rate measured by the first flow rate measurement device (9), and to decrease the supply performance of the air supply device (6), and
in a case of increasing the flow rate of the air sent to the fuel cell (1), controlling, by the controller (10), the passage resistance varying device (12) to increase the passage resistance of the second air passage (8), to detect a decrease in the air flow rate measured by the first flow rate measurement device (9), and to increase the supply performance of the air supply device (6).

## Patentansprüche

1. Brennstoffzellensystem, umfassend:
eine Brennstoffzelle (1), die konfiguriert ist, um Leistung unter Verwendung eines Brennstoffgases und Luft zu erzeugen,
einen Brennstoffprozessor (4), der enthält: einen Reformer (2), der konfiguriert ist, um aus einem Rohmaterial und Wasser ein reformiertes Gas zu erzeugen, das Wasserstoff als eine Hauptkomponente enthält, und einen selektiven Oxidierer (3), der stromabwärts von dem Reformer (2) angeordnet ist und konfiguriert ist, um das Brennstoffgas zu erzeugen,
indem er eine selektive Oxidationsreaktion zwischen in dem reformierten Gas enthaltenem Kohlenmonoxid und Sauerstoff in der Luft veranlasst,
eine Luftzufuhreinrichtung (6), die konfiguriert ist, um Luft für die Verwendung bei der Erzeugung von Leistung zu einer Kathode der Brennstoffzelle (1) zu senden und um Luft für die Verwendung bei der selektiven Oxidationsreaktion zu dem selektiven Oxidierer (3) zu senden,
eine erste Luftleitung (7), deren eines Ende mit der Kathode der Brennstoffzelle (1) verbunden ist und deren anderes Ende mit der Luftzufuhreinrichtung (6) verbunden ist,
eine zweite Luftleitung (8), deren eines Ende mit einem Verzweigungsteil der ersten Luftleitung (7), an dem die zweite Luftleitung (8) von der ersten Luftleitung (7) verzweigt, verbunden ist und deren anderes Ende mit dem selektiven Oxidierer (3) verbunden ist,
eine erste Flussratenmesseinrichtung (9), die an der zweiten Luftleitung (8) angeordnet ist und konfiguriert ist, um die Flussrate der zu dem selektiven Oxidierer (3) zugeführten Luft zu messen, und
eine Steuereinrichtung (10), die konfiguriert ist, um die Luftzufuhreinrichtung (6) zu steuern,
weiterhin umfassend:
eine Durchgangswiderstand-Variationseinrichtung (12), die an der zweiten Luftleitung (8) angeordnet ist und konfiguriert ist, um den Durchgangswiderstand der zweiten Luftleitung (8) zu variieren,
wobei die ersten und zweiten Luftleitungen (7, 8) derart ausgebildet sind, dass die Flussrate der zu dem selektiven Oxidierer (3) gesendeten Luft kleiner als die Flussrate der zu der Kathode gesendeten Luft ist,
wobei, während die Brennstoffzelle (1) Leistung erzeugt, die Steuereinrichtung (10) konfiguriert ist, um eine Regelung zum Steuern der Zufuhrleistung der Luftzufuhreinrichtung (6) basierend auf der durch die erste Flussratenmesseinrichtung (9) gemessenen Flussrate der zu dem selektiven Oxidierer (3) gesendeten Luft durchzuführen, sodass die Flussrate der zu dem selektiven Oxidierer (3) gesendeten Luft einen Zielwert annimmt, der basierend auf der durch die Brennstoffzelle (1) zu erzeugenden Leistung gesetzt ist, und wobei die Steuereinrichtung (10) konfiguriert ist, um die Zufuhrleistung zu steuern, um Luft zu der Kathode und zu dem selektiven Oxidierer (3) zuzuführen,
**dadurch gekennzeichnet, dass**:
die Steuereinrichtung (10) eine derartige Steuerung durchführt, dass:
wenn sich die Flussrate der zu der Brennstoffzelle (1) gesendeten Luft vermindert, die Steuereinrichtung (10) konfiguriert ist, um die Durchgangswiderstand-Variationseinrichtung (12) für eine Verminderung des Durchgangswiderstands der zweiten Luftleitung (8) zu steuern, eine Erhöhung der durch die erste Flussratenmesseinrichtung (9) gemessenen Luftflussrate zu erfassen und die Zufuhrleistung der Luftzufuhreinrichtung (6) zu vermindern, und
wenn sich die Flussrate der zu der Brennstoffzelle (1) gesendeten Luft erhöht, die Steuereinrichtung (10) konfiguriert ist, um die Durchgangswiderstand-Variationseinrichtung (12) für eine Erhöhung des Durchgangswiderstands der zweiten Luftleitung (8) zu steuern, eine Verminderung der durch die erste Flussratenmesseinrichtung (9) gemessenen Luftflussrate zu erfassen und die Zufuhrleistung der Luftzufuhreinrichtung (6) zu erhöhen.

2. Brennstoffzellensystem nach Anspruch 1, das weiterhin eine Wechselrichterschaltung umfasst, die konfiguriert ist, um eine durch die Brennstoffzelle (1) erzeugte Gleichstromleistung zu einer Wechselstromleistung zu wandeln und die Wechselstromleistung auszugeben,
wobei die Steuereinrichtung (10) konfiguriert ist, um die DurchgangswiderstandVariationseinrichtung in Übereinstimmung mit der Ausgabe aus der Wechselrichterschaltung für eine Steuerung der Zufuhrleistung der Luftzufuhreinrichtung (6) zu steuern, um dadurch die Flussrate der zu dem selektiven Oxidierer (3) gesendeten Luft und die Flussrate der zu der Brennstoffzelle (1) gesendeten Luft zu variieren.

3. Brennstoffzellensystem nach Anspruch 1 oder 2, das weiterhin ein Ventil umfasst, dass an der ersten Luftleitung (7) an einer Position zwischen dem Verzweigungsteil der ersten Luftleitung (7) und der Brennstoffzelle (1) angeordnet ist und konfiguriert ist, um Luft zu der Brennstoffzelle (1) zuzuführen und die Luftzufuhr zu der Brennstoffzelle (1) zu unterbrechen,
wobei, wenn das Ventil geöffnet wird, um die Zufuhr von Luft zu der Brennstoffzelle (1) zu starten, die Steuereinrichtung (10) konfiguriert ist, um die Durchgangswiderstand-Variationseinrichtung für eine Verminderung des Durchgangswiderstands der zweiten Luftleitung (8) zu steuern.

4. Brennstoffzellensystem nach einem der Ansprüche 1 bis 3, das weiterhin eine zweite Flussratenmesseinrichtung umfasst, die an der ersten Luftleitung (7) an einer Position zwischen dem Verzweigungsteil der ersten Luftleitung (7) und der Brennstoffzelle (1) angeordnet ist und konfiguriert ist, um die Flussrate der zu der Brennstoffzelle (1) zugeführten Luft zu messen,
wobei die Steuereinrichtung (10) konfiguriert ist, um die Durchgangswiderstand-Variationseinrichtung basierend auf der durch die zweite Flussratenmesseinrichtung gemessenen Luftflussrate zu steuern, um die durch die erste Flussratenmesseinrichtung (9) gemessene Luftflussrate zu variieren, und die Zufuhrleistung der Luftzufuhreinrichtung (6) in Übereinstimmung mit der variierten Luftflussrate zu steuern.

5. Brennstoffzellensystem nach Anspruch 4, wobei:
die Steuereinrichtung (10) konfiguriert ist, um einen ersten Flussratenschwellwert, der zuvor in Übereinstimmung mit der durch die Brennstoffzelle (1) zu erzeugenden Leistung gesetzt wird und aus dem oberen Grenzwert der Flussrate der zu der Brennstoffzelle (1) zugeführten Luft berechnet wird, und einen zweiten Flussratenschwellwert, der zuvor in Übereinstimmung mit der durch die Brennstoffzelle (1) zu erzeugenden Leistung gesetzt wird und aus dem unteren Grenzwert der Flussrate der zu der Brennstoffzelle (1) zugeführten Luft berechnet wird, vorzuspeichern, wobei die Steuereinrichtung (10) einen Luftflussraten-Bestimmungsabschnitt enthält, der konfiguriert ist, um die durch die zweite Flussratenmesseinrichtung gemessene Luftflussrate mit dem ersten Flussratenschwellwert und
dem zweiten Flussratenschwellwert zu vergleichen, und
wobei die Steuereinrichtung (10) konfiguriert ist, um eine derartige Steuerung durchzuführen, dass:
wenn der Luftflussraten-Bestimmungsabschnitt bestimmt, dass die durch die zweite Flussratenmesseinrichtung gemessene Luftflussrate den ersten Flussratenschwellwert überschritten hat, die Steuereinrichtung (10) konfiguriert ist, um die Flussrate der durch die zweite Luftleitung (8) fließenden Luft zu erhöhen, indem sie die Durchgangswiderstand-Variationseinrichtung für eine Verminderung des Durchgangswiderstands der zweiten Luftleitung (8) steuert, die erhöhte Flussrate aus einem Messergebnis der ersten Flussratenmesseinrichtung (9) zu erfassen und die Zufuhrleistung der Luftzufuhreinrichtung (6) zu vermindern, und
wenn der Luftflussraten-Bestimmungsabschnitt bestimmt, dass die durch die zweite Flussratenmesseinrichtung gemessene Luftflussrate unter den zweiten Flussratenschwellwert gefallen ist, die Steuereinrichtung (10) konfiguriert ist, um die Flussrate der durch die zweite Luftleitung (8) fließenden Luft zu vermindern, indem sie die Durchgangswiderstand-Variationseinrichtung für eine Erhöhung des Durchgangswiderstands der zweiten Luftleitung (8) steuert, die verminderte Flussrate aus einem Messergebnis der ersten Flussratenmesseinrichtung (9) zu erfassen und die Zufuhrleistung der Luftzufuhreinrichtung (6) zu erhöhen.

6. Brennstoffzellensystem nach einem der Ansprüche 1 bis 5, das weiterhin eine Spannungsmesseinrichtung umfasst, die konfiguriert ist, um eine Anschlussspannung der Brennstoffzelle (1) zu messen,
wobei die Steuereinrichtung (10) konfiguriert ist, um die Regelung der Zufuhrleistung der Luftzufuhreinrichtung (6) zu stoppen, wenn während der Erzeugung von Leistung durch die Brennstoffzelle (1) die Steuereinrichtung (10) basierend auf einem Messergebnis der Spannungsmesseinrichtung bestimmt, dass sich die Anschlussspannung der Brennstoffzelle (1) wenigstens um einen zuvor gesetzten ersten vorbestimmten Wert vermindert hat.

7. Brennstoffzellensystem nach einem der Ansprüche 1 bis 5, wobei:
die Steuereinrichtung (10) konfiguriert ist, um die Regelung der Zufuhrleistung der Luftzufuhreinrichtung (6) zu stoppen, wenn während der Erzeugung von Leistung durch die Brennstoffzelle (1) eine Differenz zwischen dem Zielwert der Luftflussrate und dem durch die erste Flussratenmesseinrichtung (9) gemessenen Wert der Luftflussrate größer oder gleich einem zuvor gesetzten ersten Flussratenwert wird.

8. Brennstoffzellensystem nach Anspruch 7, wobei:
wenn die Differenz zwischen dem Zielwert der Luftflussrate und dem durch die erste Flussratenmesseinrichtung (9) gemessenen Wert der Luftflussrate größer oder gleich dem zuvor gesetzten ersten Flussratenwert wird und sich der Zielwert der Luftflussrate erhöht oder vermindert, die Steuereinrichtung (10) konfiguriert ist, um die Regelung der Zufuhrleistung der Luftzufuhreinrichtung (6) zu stoppen.

9. Verfahren zum Steuern eines Brennstoffsystems,
wobei das Brennstoffsystem umfasst:
eine Brennstoffzelle (1), die konfiguriert ist, um Leistung unter Verwendung eines Brennstoffgases und Luft zu erzeugen,
einen Brennstoffprozessor (4), der enthält: einen Reformer (2), der konfiguriert ist, um aus einem Rohmaterial und Wasser ein reformiertes Gas zu erzeugen, das Wasserstoff als eine Hauptkomponente enthält, und einen selektiven Oxidierer (3), der stromabwärts von dem Reformer (2) angeordnet ist und konfiguriert ist, um das Brennstoffgas zu erzeugen, indem er eine selektive Oxidationsreaktion zwischen in dem reformierten Gas enthaltenem Kohlenmonoxid und Sauerstoff in der Luft veranlasst,
eine Luftzufuhreinrichtung (6), die konfiguriert ist, um Luft für die Verwendung bei der Erzeugung von Leistung zu einer Kathode der Brennstoffzelle (1) zu senden und um Luft für die Verwendung bei der selektiven Oxidationsreaktion zu dem selektiven Oxidierer (3) zu senden,
eine erste Luftleitung (7), deren eines Ende mit der Kathode der Brennstoffzelle (1) verbunden ist und deren anderes Ende mit der Luftzufuhreinrichtung (6) verbunden ist,
eine zweite Luftleitung (8), deren eines Ende mit einem Verzweigungsteil der ersten Luftleitung (7), an dem die zweite Luftleitung (8) von der ersten Luftleitung (7) verzweigt, verbunden ist und deren anderes Ende mit dem selektiven Oxidierer (3) verbunden ist,
eine erste Flussratenmesseinrichtung (9), die an der zweiten Luftleitung (8) angeordnet ist und konfiguriert ist, um die Flussrate der zu dem selektiven Oxidierer (3) zugeführten Luft zu messen, und
eine Steuereinrichtung (10), die konfiguriert ist, um die Luftzufuhreinrichtung (6) zu steuern,
**weiterhin gekennzeichnet durch:**
eine Durchgangswiderstand-Variationseinrichtung (12), die an der zweiten Luftleitung (8) angeordnet ist und konfiguriert ist, um den Durchgangswiderstand der zweiten Luftleitung (8) zu variieren,
wobei die ersten und zweiten Luftleitungen (7, 8) derart ausgebildet sind, dass die Flussrate der zu dem selektiven Oxidierer (3) gesendeten Luft kleiner als die Flussrate der zu der Kathode gesendeten Luft ist,
wobei das Verfahren umfasst:
Durchführen, **durch** die Steuereinrichtung (10), einer Regelung zum Steuern der Zufuhrleistung der Luftzufuhreinrichtung (6) nicht basierend auf der Flussrate der zu der Kathode zugeführten Luft, sondern basierend auf der **durch** die erste Flussratenmesseinrichtung (9) gemessenen Flussrate der zu dem selektiven Oxidierer (3) gesendeten Luft, sodass die Flussrate der zu dem selektiven Oxidierer (3) gesendeten Luft einen Zielwert annimmt, der basierend auf der **durch** die Brennstoffzelle (1) zu erzeugenden Leistung gesetzt wird,
wenn sich die Flussrate der zu der Brennstoffzelle (1) gesendeten Luft vermindert, Steuern, **durch** die Steuereinrichtung (10), der Durchgangswiderstand-Variationseinrichtung (12) für eine Verminderung des Durchgangswiderstands der zweiten Luftleitung (8), Erfassen einer Erhöhung der **durch** die erste Flussratenmesseinrichtung (9) gemessenen Luftflussrate und Vermindern der Zufuhrleistung der Luftzufuhreinrichtung (6), und
wenn sich die Flussrate der zu der Brennstoffzelle (1) gesendeten Luft erhöht, Steuern,
**durch** die Steuereinrichtung (10) der Durchgangswiderstand-Variationseinrichtung (12) für
eine Erhöhung des Durchgangswiderstands der zweiten Luftleitung (8), Erfassen einer Verminderung der **durch** die erste Flussratenmesseinrichtung (9) gemessenen Luftflussrate und Erhöhen der Zufuhrleistung der Luftzufuhreinrichtung (6).

## Revendications

1. Système de pile à combustible comprenant :
une pile à combustible (1) configurée pour générer de la puissance en utilisant un gaz combustible et de l'air ;
un processeur de combustible (4) comprenant un reformeur (2) configuré pour générer, à partir d'une matière première et d'eau, un gaz reformé qui contient de l'hydrogène comme composant principal, et comprenant un oxydant sélectif (3) disposé en aval du reformeur (2) et configuré pour générer le gaz combustible en provoquant une réaction d'oxydation sélective entre le monoxyde de carbone contenu dans le gaz reformé et l'oxygène de l'air ;
un dispositif d'alimentation d'air (6) configuré pour envoyer de l'air destiné à être utilisé pour générer de la puissance à une cathode de la pile à combustible (1), et pour envoyer de l'air destiné à être utilisé dans la réaction d'oxydation sélective à l'oxydant sélectif (3) ;
un premier passage d'air (7) dont une extrémité est connectée à la cathode de la pile à combustible (1) et dont l'autre extrémité est connectée au dispositif d'alimentation d'air (6) ;
un deuxième passage d'air (8) dont une extrémité est connectée à une partie de dérivation du premier passage d'air (7), où le deuxième passage d'air (8) est dérivé à partir du premier passage d'air (7), et dont l'autre extrémité est connectée à l'oxydant sélectif (3) ;
un premier dispositif de mesure de débit (9) agencé sur le deuxième passage d'air (8) et configuré pour mesurer le débit d'air fourni à l'oxydant sélectif (3) ; et
un contrôleur (10) configuré pour contrôler le dispositif d'alimentation d'air (6),
comprenant en outre
un dispositif de variation de la résistance de passage (12) agencé sur le deuxième passage d'air (8) et configuré pour faire varier la résistance de passage du deuxième passage d'air (8),
dans lequel les premier et deuxième passages d'air (7, 8) sont formés de telle sorte que le débit de l'air envoyé à l'oxydant sélectif (3) est inférieur au débit de l'air envoyé à la cathode,
pendant que la pile à combustible (1) génère de la puissance, le contrôleur (10) est configuré pour mettre en oeuvre un contrôle de rétroaction consistant à contrôler la performance d'alimentation du dispositif d'alimentation d'air (6) sur base du débit de l'air envoyé à l'oxydant sélectif (3), ledit débit étant mesuré par le premier dispositif de mesure de débit (9), de telle sorte que le débit de l'air envoyé à l'oxydant sélectif (3) devient une valeur cible qui est réglée sur base de la puissance à générer par la pile à combustible (1), et le contrôleur (10) est configuré pour contrôler la performance d'alimentation de manière à alimenter de l'air à la cathode et à l'oxydant sélectif (3),
**caractérisé en ce que** le contrôleur (10) met en oeuvre un contrôle tel que,
dans le cas d'une diminution du débit de l'air envoyé à la pile à combustible (1), le contrôleur (10) est configuré pour contrôler le dispositif de variation de la résistance de passage (12) pour diminuer la résistance de passage du deuxième passage d'air (8), pour détecter une augmentation du débit d'air mesuré par le premier dispositif de mesure de débit (9), et pour diminuer la performance d'alimentation du dispositif d'alimentation d'air (6), et
dans le cas d'une augmentation du débit de l'air envoyé à la pile à combustible (1), le contrôleur (10) est configuré pour contrôler le dispositif de variation de la résistance de passage (12) pour augmenter la résistance de passage du deuxième passage d'air (8), pour détecter une diminution du débit d'air mesuré par le premier dispositif de mesure de débit (9), et pour augmenter la performance d'alimentation du dispositif d'alimentation d'air (6).

2. Système de pile à combustible selon la revendication 1, comprenant en outre un circuit onduleur configuré pour convertir la puissance en courant continu générée par la pile à combustible (1) en une puissance en courant alternatif et pour sortir la puissance en courant alternatif, dans lequel
le contrôleur (10) est configuré pour contrôler le dispositif de variation de la résistance de passage conformément à une sortie du circuit onduleur pour contrôler la performance d'alimentation du dispositif d'alimentation d'air (6), ce qui permet de faire varier le débit de l'air envoyé à l'oxydant sélectif (3) et le débit de l'air envoyé à la pile à combustible (1).

3. Système de pile à combustible selon la revendication 1 ou 2, comprenant en outre une soupape qui est disposée sur le premier passage d'air (7), à une position située entre la partie de dérivation du premier passage d'air (7) et la pile à combustible (1), et qui est configurée pour alimenter de l'air à la pile à combustible (1) et pour couper l'alimentation d'air à la pile à combustible (1), dans lequel
dans le cas où la soupape s'ouvre pour commencer l'alimentation en air à la pile à combustible (1), le contrôleur (10) est configuré pour contrôler le dispositif de variation de la résistance de passage pour diminuer la résistance de passage du deuxième passage d'air (8).

4. Système de pile à combustible selon l'une quelconque des revendications 1 à 3, comprenant en outre un deuxième dispositif de mesure de débit qui est disposé sur le premier passage d'air (7), à une position située entre la partie de dérivation du premier passage d'air (7) et la pile à combustible (1), et qui est configuré pour mesurer le débit d'air alimenté à la pile à combustible (1), dans lequel
le contrôleur (10) est configuré pour contrôler le dispositif de variation de la résistance de passage sur base du débit d'air mesuré par le deuxième dispositif de mesure de débit, pour faire varier le débit d'air mesuré par le premier dispositif de mesure de débit (9), et pour contrôler la performance d'alimentation du dispositif d'alimentation d'air (6) conformément au débit d'air régulé.

5. Système de pile à combustible selon la revendication 4, dans lequel
le contrôleur (10) est configuré pour pré-stocker un premier seuil de débit, qui est réglé à l'avance conformément à la puissance à générer par la pile à combustible (1) et qui est calculé à partir de la valeur limite supérieure du débit de l'air alimenté à la pile à combustible (1), et un deuxième seuil de débit, qui est réglé à l'avance conformément à la puissance à générer par la pile à combustible (1) et qui est calculé à partir de la valeur limite inférieure du débit de l'air alimenté à la pile à combustible (1), et le contrôleur (10) comprend une section de détermination du débit d'air configurée pour comparer le débit d'air mesuré par le deuxième dispositif de mesure de débit au premier seuil de débit et au deuxième seuil de débit, et
le contrôleur (10) est configuré pour mettre en oeuvre un contrôle tel que,
si la section de détermination du débit d'air détermine que le débit d'air mesuré par le deuxième dispositif de mesure de débit a dépassé le premier seuil de débit, alors le contrôleur (10) est configuré pour augmenter le débit de l'air qui s'écoule à travers le deuxième passage d'air (8) en contrôlant le dispositif de variation de la résistance de passage pour diminuer la résistance de passage du deuxième passage d'air (8), pour détecter le débit augmenté à partir d'un résultat de mesure par le premier dispositif de mesure de débit (9), et pour diminuer la performance d'alimentation du dispositif d'alimentation d'air (6), et
si la section de détermination du débit d'air détermine que le débit d'air mesuré par le deuxième dispositif de mesure de débit a chuté sous le deuxième seuil de débit, alors le contrôleur (10) est configuré pour diminuer le débit de l'air qui s'écoule à travers le deuxième passage d'air (8) en contrôlant le dispositif de variation de la résistance de passage pour augmenter la résistance de passage du deuxième passage d'air (8), pour détecter le débit diminué à partir d'un résultat de mesure par le premier dispositif de mesure de débit (9), et pour augmenter la performance d'alimentation du dispositif d'alimentation d'air (6).

6. Système de pile à combustible selon l'une quelconque des revendications 1 à 5, comprenant en outre un dispositif de mesure de tension configuré pour mesurer une tension de borne de la pile à combustible (1), dans lequel
le contrôleur (10) est configuré pour arrêter le contrôle de rétroaction de la performance d'alimentation du dispositif d'alimentation d'air (6) si, pendant que la pile à combustible (1) génère de la puissance, le contrôleur (10) est configuré pour déterminer, sur base d'un résultat de mesure par le dispositif de mesure de tension, que la tension de borne de la pile à combustible (1) a diminué d'au moins une première valeur prédéterminée qui est réglée à l'avance.

7. Système de pile à combustible selon l'une quelconque des revendications 1 à 5, dans lequel
le contrôleur (10) est configuré pour arrêter le contrôle de rétroaction de la performance d'alimentation du dispositif d'alimentation d'air (6) si, pendant que la pile à combustible (1) génère de la puissance, une différence entre la valeur cible du débit d'air et la valeur du débit d'air mesurée par le premier dispositif de mesure de débit (9) devient supérieure ou égale à une première valeur de débit qui est réglée à l'avance.

8. Système de pile à combustible selon la revendication 7, dans lequel
si la différence entre la valeur cible du débit d'air et la valeur du débit d'air mesurée par le premier dispositif de mesure de débit (9) devient supérieure ou égale à la première valeur de débit qui est réglée à l'avance, et la valeur cible du débit d'air augmente ou diminue, alors le contrôleur (10) est configuré pour arrêter le contrôle de rétroaction de la performance d'alimentation du dispositif d'alimentation d'air (6).

9. Procédé pour contrôler un système de pile à combustible,
le système de pile à combustible comprenant :
une pile à combustible (1) configurée pour générer de la puissance en utilisant un gaz combustible et de l'air ;
un processeur de combustible (4) comprenant un reformeur (2) configuré pour générer, à partir d'une matière première et d'eau, un gaz reformé qui contient de l'hydrogène comme composant principal, et comprenant un oxydant sélectif (3) disposé en aval du reformeur (2) et configuré pour générer le gaz combustible en provoquant une réaction d'oxydation sélective entre le monoxyde de carbone contenu dans le gaz reformé et l'oxygène de l'air ;
un dispositif d'alimentation d'air (6) configuré pour envoyer de l'air destiné à être utilisé pour générer de la puissance à une cathode de la pile à combustible (1), et pour envoyer de l'air destiné à être utilisé dans la réaction d'oxydation sélective à l'oxydant sélectif (3) ;
un premier passage d'air (7) dont une extrémité est connectée à la cathode de la pile à combustible (1) et l'autre extrémité est connectée au dispositif d'alimentation d'air (6) ;
un deuxième passage d'air (8) dont une extrémité est connectée à une partie de dérivation du premier passage d'air (7), où le deuxième passage d'air (8) est dérivé à partir du premier passage d'air (7), et dont l'autre extrémité est connectée à l'oxydant sélectif (3) ;
un premier dispositif de mesure de débit (9) agencé sur le deuxième passage d'air (8) et configuré pour mesurer le débit d'air fourni à l'oxydant sélectif (3) ;
et
un contrôleur (10) configuré pour contrôler le dispositif d'alimentation d'air (6),
**caractérisé en ce qu'**il comprend en outre un dispositif de variation de la résistance de passage (12) agencé sur le deuxième passage d'air (8) et configuré pour faire varier la résistance de passage du deuxième passage d'air (8),
dans lequel les premier et deuxième passages d'air (7, 8) sont formés de telle sorte que le débit de l'air envoyé à l'oxydant sélectif (3) est inférieur au débit de l'air envoyé à la cathode,
le procédé comprenant
la mise en oeuvre, par le contrôleur (10), d'un contrôle de rétroaction consistant à contrôler la performance d'alimentation du dispositif d'alimentation d'air (6) qui n'est pas basé sur le débit de l'air alimenté à la cathode mais sur le débit de l'air envoyé à l'oxydant sélectif (3), ledit débit étant mesuré par le premier dispositif de mesure de débit (9), de telle sorte que le débit de l'air envoyé à l'oxydant sélectif (3) devient une valeur cible qui est établie sur base de la puissance à générer par la pile à combustible (1),
dans le cas d'une diminution du débit de l'air envoyé à la pile à combustible (1), le contrôle, par le contrôleur (10), du dispositif de variation de la résistance de passage (12) pour diminuer la résistance de passage du deuxième passage d'air (8), pour détecter une augmentation du débit d'air mesuré par le premier dispositif de mesure de débit (9), et pour diminuer la performance d'alimentation du dispositif d'alimentation d'air (6), et
dans le cas d'une augmentation du débit de l'air envoyé à la pile à combustible (1), le contrôle, par le contrôleur (10), du dispositif de variation de la résistance de passage (12) pour augmenter la résistance de passage du deuxième passage d'air (8), pour détecter une diminution du débit d'air mesuré par le premier dispositif de mesure de débit (9), et pour augmenter la performance d'alimentation du dispositif d'alimentation d'air (6).
